# EUROPEAN PATENT SPECIFICATION

(11) **EP 4 049 393 B1**
(45) Date of publication and mention of the grant of the patent: **22.11.2023**
(21) Application number: 20804138.4
(22) Date of filing: 23.10.2020
(51) Int. Cl.: H04L 1/00, H04B 7/155

(54) **REDUCING FEEDBACK LATENCY FOR NETWORK CODING IN WIRELESS BACKHAUL COMMUNICATIONS NETWORKS**
VERRINGERUNG DER RÜCKKOPPLUNGSLATENZZEIT FÜR NETZWERKKODIERUNG IN DRAHTLOSEN BACKHAUL-KOMMUNIKATIONSSYSTEMEN
RÉDUCTION DE LATENCE DE RÉTROACTION POUR UN CODAGE DE RÉSEAU DANS DES RÉSEAUX DE COMMUNICATION PAR LIAISON TERRESTRE SANS FIL

(30) Priority: 25.10.2019 US 201962926381 P; 22.10.2020 US 202017077780
(43) Date of publication of application: 31.08.2022
(60) Divisional application: 23197207.6
(73) Proprietor: QUALCOMM Incorporated, San Diego, CA 92121-1714 (US)
(72) Inventor: AKL, Naeem, San Diego, California 92121-1714 (US); HAMPEL, Karl Georg, San Diego, California 92121-1714 (US); ABEDINI, Navid, San Diego, California 92121-1714 (US); LUO, Jianghong, San Diego, California 92121-1714 (US); LI, Junyi, San Diego, California 92121-1714 (US); BLESSENT, Luca, San Diego, California 92121-1714 (US); LUO, Tao, San Diego, California 92121-1714 (US)
(74) Representative: Dunlop, Hugh Christopher
(86) International application number: PCT/US2020/057034
(87) International publication number: WO 2021/081311

(56) References cited:
- WO-A1-2016/146028
- WO-A1-2017/091177
- INTEL CORPORATION: "Network coding for Release 17 IAB", 3GPP DRAFT; RP-192206_NETWORK CODING FOR IAB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. Newport Beach, U.S.A; 20190916 - 20190920 15 September 2019 (2019-09-15), XP051779435, Retrieved from the Internet: URL:http://www.3gpp.org/ftp/Meetings_3GPP_ SYNC/RAN/Docs/RP-192206.zip [retrieved on 2019-09-15]
- ZHANG CHEN ET AL: "Joint Opportunistic Routing and Intra-Flow Network Coding in Multi-Hop Wireless Networks: A Survey", IEEE NETWORK, IEEE SERVICE CENTER, NEW YORK, NY, US, vol. 33, no. 1, 1 January 2018 (2018-01-01), pages 113-119, XP011704487, ISSN: 0890-8044, DOI: 10.1109/MNET.2018.1700297 [retrieved on 2019-01-11]
- CLEJU N ET AL: "Network Coding Node Placement for Delay Minimization in Streaming Overlays", COMMUNICATIONS (ICC), 2010 IEEE INTERNATIONAL CONFERENCE ON, IEEE, PISCATAWAY, NJ, USA, 23 May 2010 (2010-05-23), pages 1-5, XP031703434, ISBN: 978-1-4244-6402-9
- MA ZHENG ET AL: "Key techniques for 5G wireless communications: network architecture, physical layer, and MAC layer perspectives", SCIENCE CHINA INFORMATION SCIENCES, SCIENCE CHINA PRESS, HEIDELBERG, vol. 58, no. 4, 12 February 2015 (2015-02-12), pages 1-20, XP035469865, ISSN: 1674-733X, DOI: 10.1007/S11432-015-5293-Y [retrieved on 2015-02-12]

## Description

### BACKGROUND

The following relates generally to wireless communications, and more specifically to reducing feedback latency for network coding in wireless backhaul communications networks.

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal frequency division multiple access (OFDMA), or discrete Fourier transform spread orthogonal frequency division multiplexing (DFT-S-OFDM). A wireless multiple-access communications system may include a number of base stations or network access nodes, each simultaneously supporting communication for multiple communication devices, which may be otherwise known as user equipment (UE).

Some wireless communications systems may support both access and backhaul wireless communications. For example, such wireless communication systems may include nodes, which may also be referred to as anchor nodes, parent nodes, relay nodes, or child nodes depending on where the node is within the network, that facilitate wireless communication between a UE and the network. In some cases, these wireless communications systems may apply encoding procedures to data as the data is transmitted along the nodes. Some coding techniques in networks such as access and backhaul wireless communications networks can be improved.

3GPP draft RP-192206 NETWORK CODING FOR IAB relates to network coding for release 17 IAB. In this draft, two schemes are presented: in the first, network coding/ decoding is applied between the donor and the destination IAB nodes, in a manner which is completely transparent to the UE; in the second scheme, network coding/decoding is applied between the donor IAB node and the UE. According to these two approaches, network coding is performed at the source only and there is no further network coding at intermediate nodes.

WO2016/146028 relates to traffic engineering with redundancy. IEEE NETWORK, IEEE SERVICE CENTER, NEW YORK, NY, US, vol. 33, no. 1, pages 113-119, XP011704487, relates to joint opportunistic routing and intra-flow network coding in multi-hop wireless networks. COMMUNICATIONS (ICC), 2010 IEEE INTERNATIONAL CONFERENCE ON, IEEE, PISCATAWAY, NJ, USA, pages 1-5, XP031703434 relates to network coding node placement for delay minimization in streaming overlays. WO2017/091177 relates to random network coding in orthogonal frequency division multiple access (OFDMA) networks using control signalling. SCIENCE CHINA INFORMATION SCIENCES, SCIENCE CHINA PRESS, HEIDELBERG, vol. 58, no. 4, pages 1-20, XP035469865 relates to techniques for 5G wireless communications.

### SUMMARY

The described techniques relate to improved methods, systems, devices, and apparatuses that support reducing feedback latency for network coding in wireless backhaul communications networks. Generally, the described techniques provide for performing network coding at an intermediate integrated access and backhaul (IAB) node of a wireless backhaul communications network. An IAB network may include an IAB donor (or anchor) node and one or more relay nodes downstream from the donor node. In some aspects, an IAB network shares resources between access and backhaul links such that access traffic may be relayed on wireless backhaul. In some cases, the same technology may be used for access links and backhaul links. IAB donor nodes may provide access to child user equipments (UEs) and the wireless backhaul functionality to IAB nodes. An IAB donor may include a central unit (CU) for control of the IAB network and one or more distributed units (DU) for scheduling of child IAB nodes. An IAB donor may have a wireline connection to the core network. Downstream from the IAB donor node may include one or more IAB nodes (also referred to as parent nodes, relay nodes, or child nodes, depending upon where the node is within the IAB network) within the IAB network, with each node wirelessly relaying traffic of its child nodes (e.g., LTEs, or other IAB nodes), to the parent node (e.g., IAB donor or IAB node). A UE may connect wirelessly to a donor or IAB node that is within range of the UE.

Wireless communications systems described herein may support network coding operations at intermediate nodes. For example, an intermediate node may receive unencoded or raw data packets and perform network coding, such as fountain coding, to generate encoded packets. The intermediate node may then distribute the packet segments among a set of paths to the receiving UE. Encoding at the intermediate node and transmitting the packet segments using the set of paths may be robust against blockage or congestion at a particular node and establish clear end points (e.g., receiver and transmitter) for the encoded packets. In some cases, the intermediate node may perform network coding to reduce feedback latency. For example, the IAB intermediate node may decode received packet segments (e.g., fountain coded packets) and report whether decoding is successful to prompt retransmission by the sender. This may improve the rate of providing feedback, as the IAB intermediate node may send feedback instead of sending the packets one or more hops to the IAB access node and having the IAB access node being solely responsible for providing feedback.

The present invention relates to the methods and apparatuses defined by the attached claims.

### BRIEF DESCRIPTION OF THE DRAWINGS

FIG. 1 illustrates an example of a system for wireless communications that supports reducing feedback latency for network coding in wireless backhaul communications networks in accordance with aspects of the present disclosure.
FIG. 2 illustrates an example of a wireless communications system that supports reducing feedback latency for network coding in wireless backhaul communications networks in accordance with aspects of the present disclosure.
FIG. 3 illustrates an example of a coding procedure that supports reducing feedback latency for network coding in wireless backhaul communications networks in accordance with aspects of the present disclosure.
FIG. 4 illustrates an example of a transmission path configuration that supports reducing feedback latency for network coding in wireless backhaul communications networks in accordance with aspects of the present disclosure.
FIG. 5 illustrates an example of a protocol stack that supports reducing feedback latency for network coding in wireless backhaul communications networks in accordance with aspects of the present disclosure.
FIG. 6 illustrates examples of wireless communications systems that support reducing feedback latency for network coding in wireless backhaul communications networks in accordance with aspects of the present disclosure.
FIG. 7 illustrates an example of a process flow that supports reducing feedback latency for network coding in wireless backhaul communications networks in accordance with aspects of the present disclosure.
FIG. 8 illustrates an example of a process flow that supports reducing feedback latency for network coding in wireless backhaul communications networks in accordance with aspects of the present disclosure.
FIGs. 9 and 10 show block diagrams of devices that support reducing feedback latency for network coding in wireless backhaul communications networks in accordance with aspects of the present disclosure.
FIG. 11 shows a block diagram of a communications manager that supports reducing feedback latency for network coding in wireless backhaul communications networks in accordance with aspects of the present disclosure.
FIG. 12 shows a diagram of a system including a device that supports reducing feedback latency for network coding in wireless backhaul communications networks in accordance with aspects of the present disclosure.
FIGs. 13 through 17 show flowcharts illustrating methods that support reducing feedback latency for network coding in wireless backhaul communications networks in accordance with aspects of the present disclosure.

### DETAILED DESCRIPTION

Some wireless communication systems may support an integrated access and backhaul (IAB) network that includes an IAB donor (or anchor) node and one or more relay nodes downstream from the donor node. In some aspects, an IAB network shares resources between access and backhaul links such that access traffic may be relayed on wireless backhaul. In some cases, the same technology may be used for access links and backhaul links. IAB donor nodes may provide access to child UEs and the wireless backhaul functionality to IAB nodes. An IAB donor may include a central unit (CU) for control of the IAB network and one or more distributed units (DU) for scheduling of child IAB nodes. An IAB donor may have a wireline connection to the core network. Downstream from the IAB donor node may include one or more IAB nodes (also referred to as parent nodes, relay nodes, or child nodes, depending upon where the node is within the IAB network) within the IAB network, with each wirelessly relaying traffic of its child nodes (e.g., UEs, or other IAB nodes), to the parent node (e.g., IAB donor or IAB node). A UE may connect wirelessly to a donor or IAB node that is within range of the UE.

Some wireless communications systems may support network coding operations, such as fountain coding. Fountain coding may be used to improve robustness of packet transmissions. In some systems, fountain coding may be performed by network coding layers at an IAB access node (e.g., directly serving a UE) and at the IAB donor node, but not at IAB intermediate nodes (e.g., between the IAB access node and the IAB donor node). In some cases, conventional systems using network coding may not also support multiple IAB donor DUs or UEs in a multi-connectivity configuration with multiple IAB access nodes, as there may not be a clear end-to-end configuration for network encoded packets (e.g., between a transmitter and a receiver), as there may either be multiple transmitters (e.g., multiple IAB donor DUs) or multiple receivers (e.g., multiple IAB access nodes).

Wireless communications systems described herein may support network coding at intermediate nodes. For example, an intermediate node may receive unencoded or raw data packets and perform network coding (e.g., fountain coding) to generate encoded packets. The intermediate node may then distribute the packet segments among a set of paths to the receiving UE. Encoding at the intermediate node and transmitting the packet segments using the set of paths may be robust against blockage or congestion at a particular node. Additionally, by performing the network coding at the intermediate node, the encoded packets may have an established end-to-end configuration (e.g., between the IAB donor DU and the intermediate IAB node or between the intermediate IAB node and the IAB access node).

In some cases, the intermediate node may perform network decoding to reduce feedback latency. For example, the IAB intermediate node may decode received packet segments (e.g., fountain coded packets) and report whether decoding is successful to prompt retransmission by the sender. This may improve the rate of providing feedback, as the IAB intermediate node may send feedback instead of sending the packets one or more hops to the IAB access node and having the IAB access node being solely responsible for providing feedback. Additionally, the IAB intermediate node may perform network decoding on received packets, and then transmit the decoded packets to other (e.g., downstream) nodes. For example, an IAB intermediate node may decode a number of encoded packets, and may transmit one or more decoded packets via a first wireless link and one or more other decoded packets via a second wireless link. In some examples, the IAB intermediate node may transmit the packets along one or more paths via the wireless links, and the packets may include a path identifier.

Aspects of the disclosure are initially described in the context of a wireless communications system. Aspects of the disclosure are further illustrated by and described with reference to apparatus diagrams, system diagrams, and flowcharts that relate to reducing feedback latency for network coding in wireless backhaul communications networks.

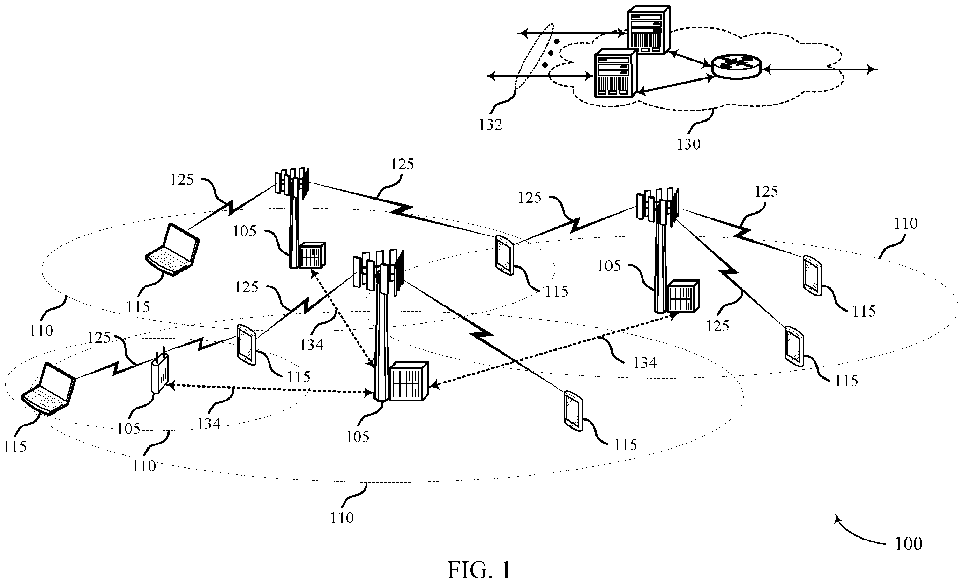

**FIG. 1** illustrates an example of a wireless communications system 100 that supports reducing feedback latency for network coding in wireless backhaul communications networks in accordance with aspects of the present disclosure. The wireless communications system 100 includes base stations 105, UEs 115, and a core network 130. In some examples, the wireless communications system 100 may be a Long Term Evolution (LTE) network, an LTE-Advanced (LTE-A) network, an LTE-A Pro network, or a New Radio (NR) network. In some cases, wireless communications system 100 may support enhanced broadband communications, ultra-reliable (e.g., mission critical) communications, low latency communications, or communications with low-cost and low-complexity devices.

Base stations 105 may wirelessly communicate with UEs 115 via one or more base station antennas. Base stations 105 described herein may include or may be referred to by those skilled in the art as a base transceiver station, a radio base station, an access point, a radio transceiver, a NodeB, an eNodeB (eNB), a next-generation NodeB or giga-NodeB (either of which may be referred to as a gNB), a Home NodeB, a Home eNodeB, or some other suitable terminology. Wireless communications system 100 may include base stations 105 of different types (e.g., macro or small cell base stations). The UEs 115 described herein may be able to communicate with various types of base stations 105 and network equipment including macro eNBs, small cell eNBs, gNBs, relay base stations, and the like.

Each base station 105 may be associated with a particular geographic coverage area 110 in which communications with various UEs 115 is supported. Each base station 105 may provide communication coverage for a respective geographic coverage area 110 via communication links 125, and communication links 125 between a base station 105 and a UE 115 may utilize one or more carriers. Communication links 125 shown in wireless communications system 100 may include uplink transmissions from a UE 115 to a base station 105, or downlink transmissions from a base station 105 to a UE 115. Downlink transmissions may also be called forward link transmissions while uplink transmissions may also be called reverse link transmissions.

The geographic coverage area 110 for a base station 105 may be divided into sectors making up a portion of the geographic coverage area 110, and each sector may be associated with a cell. For example, each base station 105 may provide communication coverage for a macro cell, a small cell, a hot spot, or other types of cells, or various combinations thereof. In some examples, a base station 105 may be movable and therefore provide communication coverage for a moving geographic coverage area 110. In some examples, different geographic coverage areas 110 associated with different technologies may overlap, and overlapping geographic coverage areas 110 associated with different technologies may be supported by the same base station 105 or by different base stations 105. The wireless communications system 100 may include, for example, a heterogeneous LTE/LTE-A/LTE-A Pro or NR network in which different types of base stations 105 provide coverage for various geographic coverage areas 110.

The term "cell" refers to a logical communication entity used for communication with a base station 105 (e.g., over a carrier), and may be associated with an identifier for distinguishing neighboring cells (e.g., a physical cell identifier (PCID), a virtual cell identifier (VCID)) operating via the same or a different carrier. In some examples, a carrier may support multiple cells, and different cells may be configured according to different protocol types (e.g., machine-type communication (MTC), narrowband Internet-of-Things (NB-IoT), enhanced mobile broadband (eMBB), or others) that may provide access for different types of devices. In some cases, the term "cell" may refer to a portion of a geographic coverage area 110 (e.g., a sector) over which the logical entity operates.

UEs 115 may be dispersed throughout the wireless communications system 100, and each UE 115 may be stationary or mobile. A UE 115 may also be referred to as a mobile device, a wireless device, a remote device, a handheld device, or a subscriber device, or some other suitable terminology, where the "device" may also be referred to as a unit, a station, a terminal, or a client. A UE 115 may also be a personal electronic device such as a cellular phone, a personal digital assistant (PDA), a tablet computer, a laptop computer, or a personal computer. In some examples, a UE 115 may also refer to a wireless local loop (WLL) station, an Internet of Things (IoT) device, an Internet of Everything (IoE) device, or an MTC device, or the like, which may be implemented in various articles such as appliances, vehicles, meters, or the like.

Some UEs 115, such as MTC or IoT devices, may be low cost or low complexity devices, and may provide for automated communication between machines (e.g., via Machine-to-Machine (M2M) communication). M2M communication or MTC may refer to data communication technologies that allow devices to communicate with one another or a base station 105 without human intervention. In some examples, M2M communication or MTC may include communications from devices that integrate sensors or meters to measure or capture information and relay that information to a central server or application program that can make use of the information or present the information to humans interacting with the program or application. Some UEs 115 may be designed to collect information or enable automated behavior of machines. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging.

Some UEs 115 may be configured to employ operating modes that reduce power consumption, such as half-duplex communications (e.g., a mode that supports one-way communication via transmission or reception, but not transmission and reception simultaneously). In some examples half-duplex communications may be performed at a reduced peak rate. Other power conservation techniques for UEs 115 include entering a power saving "deep sleep" mode when not engaging in active communications, or operating over a limited bandwidth (e.g., according to narrowband communications). In some cases, UEs 115 may be designed to support critical functions (e.g., mission critical functions), and a wireless communications system 100 may be configured to provide ultra-reliable communications for these functions.

In some cases, a UE 115 may also be able to communicate directly with other UEs 115 (e.g., using a peer-to-peer (P2P) or device-to-device (D2D) protocol). One or more of a group of UEs 115 utilizing D2D communications may be within the geographic coverage area 110 of a base station 105. Other UEs 115 in such a group may be outside the geographic coverage area 110 of a base station 105, or be otherwise unable to receive transmissions from a base station 105. In some cases, groups of UEs 115 communicating via D2D communications may utilize a one-to-many (1:M) system in which each UE 115 transmits to every other UE 115 in the group. In some cases, a base station 105 facilitates the scheduling of resources for D2D communications. In other cases, D2D communications are carried out between UEs 115 without the involvement of a base station 105.

Base stations 105 may communicate with the core network 130 and with one another. For example, base stations 105 may interface with the core network 130 through backhaul links 132 (e.g., via an S1, N2, N3, or other interface). Base stations 105 may communicate with one another over backhaul links 134 (e.g., via an X2, Xn, or other interface) either directly (e.g., directly between base stations 105) or indirectly (e.g., via core network 130).

The core network 130 may provide user authentication, access authorization, tracking, Internet Protocol (IP) connectivity, and other access, routing, or mobility functions. The core network 130 may be an evolved packet core (EPC), which may include at least one mobility management entity (MME), at least one serving gateway (S-GW), and at least one Packet Data Network (PDN) gateway (P-GW). The MME may manage non-access stratum (e.g., control plane) functions such as mobility, authentication, and bearer management for UEs 115 served by base stations 105 associated with the EPC. User IP packets may be transferred through the S-GW, which itself may be connected to the P-GW. The P-GW may provide IP address allocation as well as other functions. The P-GW may be connected to the network operators IP services. The operators IP services may include access to the Internet, Intranet(s), an IP Multimedia Subsystem (IMS), or a Packet-Switched (PS) Streaming Service.

At least some of the network devices, such as a base station 105, may include subcomponents such as an access network entity, which may be an example of an access node controller (ANC). Each access network entity may communicate with UEs 115 through a number of other access network transmission entities, which may be referred to as a radio head, a smart radio head, or a transmission/reception point (TRP). In some configurations, various functions of each access network entity or base station 105 may be distributed across various network devices (e.g., radio heads and access network controllers) or consolidated into a single network device (e.g., a base station 105).

Wireless communications system 100 may operate using one or more frequency bands, typically in the range of 300 megahertz (MHz) to 300 gigahertz (GHz). Generally, the region from 300 MHz to 3 GHz is known as the ultra-high frequency (UHF) region or decimeter band, since the wavelengths range from approximately one decimeter to one meter in length. UHF waves may be blocked or redirected by buildings and environmental features. However, the waves may penetrate structures sufficiently for a macro cell to provide service to UEs 115 located indoors. Transmission of UHF waves may be associated with smaller antennas and shorter range (e.g., less than 100 km) compared to transmission using the smaller frequencies and longer waves of the high frequency (HF) or very high frequency (VHF) portion of the spectrum below 300 MHz.

Wireless communications system 100 may also operate in a super high frequency (SHF) region using frequency bands from 3 GHz to 30 GHz, also known as the centimeter band. The SHF region includes bands such as the 5 GHz industrial, scientific, and medical (ISM) bands, which may be used opportunistically by devices that may be capable of tolerating interference from other users.

Wireless communications system 100 may also operate in an extremely high frequency (EHF) region of the spectrum (e.g., from 30 GHz to 300 GHz), also known as the millimeter band. In some examples, wireless communications system 100 may support millimeter wave (mmW) communications between UEs 115 and base stations 105, and EHF antennas of the respective devices may be even smaller and more closely spaced than UHF' antennas. In some cases, this may facilitate use of antenna arrays within a UE 115. However, the propagation of EHF transmissions may be subject to even greater atmospheric attenuation and shorter range than SHF or UHF' transmissions. Techniques disclosed herein may be employed across transmissions that use one or more different frequency regions, and designated use of bands across these frequency regions may differ by country or regulating body.

In some cases, wireless communications system 100 may utilize both licensed and unlicensed radio frequency spectrum bands. For example, wireless communications system 100 may employ License Assisted Access (LAA), LTE-Unlicensed (LTE-U) radio access technology, or NR technology in an unlicensed band such as the 5 GHz ISM band. When operating in unlicensed radio frequency spectrum bands, wireless devices such as base stations 105 and UEs 115 may employ listen-before-talk (LBT) procedures to ensure a frequency channel is clear before transmitting data. In some cases, operations in unlicensed bands may be based on a carrier aggregation configuration in conjunction with component carriers operating in a licensed band (e.g., LAA). Operations in unlicensed spectrum may include downlink transmissions, uplink transmissions, peer-to-peer transmissions, or a combination of these. Duplexing in unlicensed spectrum may be based on frequency division duplexing (FDD), time division duplexing (TDD), or a combination of both.

In some examples, base station 105 or UE 115 may be equipped with multiple antennas, which may be used to employ techniques such as transmit diversity, receive diversity, multiple-input multiple-output (MIMO) communications, or beamforming. For example, wireless communications system 100 may use a transmission scheme between a transmitting device (e.g., a base station 105) and a receiving device (e.g., a UE 115), where the transmitting device is equipped with multiple antennas and the receiving device is equipped with one or more antennas. MIMO communications may employ multipath signal propagation to increase the spectral efficiency by transmitting or receiving multiple signals via different spatial layers, which may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream, and may carry bits associated with the same data stream (e.g., the same codeword) or different data streams. Different spatial layers may be associated with different antenna ports used for channel measurement and reporting. MIMO techniques include single-user MIMO (SU-MIMO) where multiple spatial layers are transmitted to the same receiving device, and multiple-user MIMO (MU-MIMO) where multiple spatial layers are transmitted to multiple devices.

Beamforming, which may also be referred to as spatial filtering, directional transmission, or directional reception, is a signal processing technique that may be used at a transmitting device or a receiving device (e.g., a base station 105 or a UE 115) to shape or steer an antenna beam (e.g., a transmit beam or receive beam) along a spatial path between the transmitting device and the receiving device. Beamforming may be achieved by combining the signals communicated via antenna elements of an antenna array such that signals propagating at particular orientations with respect to an antenna array experience constructive interference while others experience destructive interference. The adjustment of signals communicated via the antenna elements may include a transmitting device or a receiving device applying certain amplitude and phase offsets to signals carried via each of the antenna elements associated with the device. The adjustments associated with each of the antenna elements may be defined by a beamforming weight set associated with a particular orientation (e.g., with respect to the antenna array of the transmitting device or receiving device, or with respect to some other orientation).

In one example, a base station 105 may use multiple antennas or antenna arrays to conduct beamforming operations for directional communications with a UE 115. For instance, some signals (e.g. synchronization signals, reference signals, beam selection signals, or other control signals) may be transmitted by a base station 105 multiple times in different directions, which may include a signal being transmitted according to different beamforming weight sets associated with different directions of transmission. Transmissions in different beam directions may be used to identify (e.g., by the base station 105 or a receiving device, such as a UE 115) a beam direction for subsequent transmission and/or reception by the base station 105.

Some signals, such as data signals associated with a particular receiving device, may be transmitted by a base station 105 in a single beam direction (e.g., a direction associated with the receiving device, such as a UE 115). In some examples, the beam direction associated with transmissions along a single beam direction may be determined based at least in in part on a signal that was transmitted in different beam directions. For example, a UE 115 may receive one or more of the signals transmitted by the base station 105 in different directions, and the UE 115 may report to the base station 105 an indication of the signal it received with a highest signal quality, or an otherwise acceptable signal quality. Although these techniques are described with reference to signals transmitted in one or more directions by a base station 105, a UE 115 may employ similar techniques for transmitting signals multiple times in different directions (e.g., for identifying a beam direction for subsequent transmission or reception by the UE 115), or transmitting a signal in a single direction (e.g., for transmitting data to a receiving device).

A receiving device (e.g., a UE 115, which may be an example of a mmW receiving device) may try multiple receive beams when receiving various signals from the base station 105, such as synchronization signals, reference signals, beam selection signals, or other control signals. For example, a receiving device may try multiple receive directions by receiving via different antenna subarrays, by processing received signals according to different antenna subarrays, by receiving according to different receive beamforming weight sets applied to signals received at a plurality of antenna elements of an antenna array, or by processing received signals according to different receive beamforming weight sets applied to signals received at a plurality of antenna elements of an antenna array, any of which may be referred to as "listening" according to different receive beams or receive directions. In some examples a receiving device may use a single receive beam to receive along a single beam direction (e.g., when receiving a data signal). The single receive beam may be aligned in a beam direction determined based at least in part on listening according to different receive beam directions (e.g., a beam direction determined to have a highest signal strength, highest signal-to-noise ratio, or otherwise acceptable signal quality based at least in part on listening according to multiple beam directions).

In some cases, the antennas of a base station 105 or UE 115 may be located within one or more antenna arrays, which may support MIMO operations, or transmit or receive beamforming. For example, one or more base station antennas or antenna arrays may be co-located at an antenna assembly, such as an antenna tower. In some cases, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations.

In some cases, wireless communications system 100 may be a packet-based network that operate according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use hybrid automatic repeat request (HARQ) to provide retransmission at the MAC layer to improve link efficiency. In the control plane, the Radio Resource Control (RRC) protocol layer may provide establishment, configuration, and maintenance of an RRC connection between a UE 115 and a base station 105 or core network 130 supporting radio bearers for user plane data. At the Physical layer, transport channels may be mapped to physical channels.

In some cases, UEs 115 and base stations 105 may support retransmissions of data to increase the likelihood that data is received successfully. HARQ feedback is one technique of increasing the likelihood that data is received correctly over a communication link 125. HARQ may include a combination of error detection (e.g., using a cyclic redundancy check (CRC)), forward error correction (FEC), and retransmission (e.g., automatic repeat request (ARQ)). HARQ may improve throughput at the MAC layer in poor radio conditions (e.g., signal-to-noise conditions). In some cases, a wireless device may support same-slot HARQ feedback, where the device may provide HARQ feedback in a specific slot for data received in a previous symbol in the slot. In other cases, the device may provide HARQ feedback in a subsequent slot, or according to some other time interval.

Time intervals in LTE or NR may be expressed in multiples of a basic time unit, which may, for example, refer to a sampling period of Tₛ = 1/30,720,000 seconds. Time intervals of a communications resource may be organized according to radio frames each having a duration of 10 milliseconds (ms), where the frame period may be expressed as T_{f} = 307,200 Tₛ. The radio frames may be identified by a system frame number (SFN) ranging from 0 to 1023. Each frame may include 10 subframes numbered from 0 to 9, and each subframe may have a duration of 1 ms. A subframe may be further divided into 2 slots each having a duration of 0.5 ms, and each slot may contain 6 or 7 modulation symbol periods (e.g., depending on the length of the cyclic prefix prepended to each symbol period). Excluding the cyclic prefix, each symbol period may contain 2048 sampling periods. In some cases, a subframe may be the smallest scheduling unit of the wireless communications system 100, and may be referred to as a transmission time interval (TTI). In other cases, a smallest scheduling unit of the wireless communications system 100 may be shorter than a subframe or may be dynamically selected (e.g., in bursts of shortened TTIs (sTTIs) or in selected component carriers using sTTIs).

In some wireless communications systems, a slot may further be divided into multiple mini-slots containing one or more symbols. In some instances, a symbol of a mini-slot or a mini-slot may be the smallest unit of scheduling. Each symbol may vary in duration depending on the subcarrier spacing or frequency band of operation, for example. Further, some wireless communications systems may implement slot aggregation in which multiple slots or mini-slots are aggregated together and used for communication between a UE 115 and a base station 105.

The term "carrier" refers to a set of radio frequency spectrum resources having a defined physical layer structure for supporting communications over a communication link 125. For example, a carrier of a communication link 125 may include a portion of a radio frequency spectrum band that is operated according to physical layer channels for a given radio access technology. Each physical layer channel may carry user data, control information, or other signaling. A carrier may be associated with a pre-defined frequency channel (e.g., an evolved universal mobile telecommunication system terrestrial radio access (E-UTRA) absolute radio frequency channel number (EARFCN)), and may be positioned according to a channel raster for discovery by UEs 115. Carriers may be downlink or uplink (e.g., in an FDD mode), or be configured to carry downlink and uplink communications (e.g., in a TDD mode). In some examples, signal waveforms transmitted over a carrier may be made up of multiple sub-carriers (e.g., using multi-carrier modulation (MCM) techniques such as orthogonal frequency division multiplexing (OFDM) or discrete Fourier transform spread OFDM (DFT-S-OFDM)).

The organizational structure of the carriers may be different for different radio access technologies (e.g., LTE, LTE-A, LTE-A Pro, NR). For example, communications over a carrier may be organized according to TTIs or slots, each of which may include user data as well as control information or signaling to support decoding the user data. A carrier may also include dedicated acquisition signaling (e.g., synchronization signals or system information, etc.) and control signaling that coordinates operation for the carrier. In some examples (e.g., in a carrier aggregation configuration), a carrier may also have acquisition signaling or control signaling that coordinates operations for other carriers.

Physical channels may be multiplexed on a carrier according to various techniques. A physical control channel and a physical data channel may be multiplexed on a downlink carrier, for example, using time division multiplexing (TDM) techniques, frequency division multiplexing (FDM) techniques, or hybrid TDM-FDM techniques. In some examples, control information transmitted in a physical control channel may be distributed between different control regions in a cascaded manner (e.g., between a common control region or common search space and one or more UE-specific control regions or UE-specific search spaces).

A carrier may be associated with a particular bandwidth of the radio frequency spectrum, and in some examples the carrier bandwidth may be referred to as a "system bandwidth" of the carrier or the wireless communications system 100. For example, the carrier bandwidth may be one of a number of predetermined bandwidths for carriers of a particular radio access technology (e.g., 1.4, 3, 5, 10, 15, 20, 40, or 80 MHz). In some examples, each served UE 115 may be configured for operating over portions or all of the carrier bandwidth. In other examples, some UEs 115 may be configured for operation using a narrowband protocol type that is associated with a predefined portion or range (e.g., set of subcarriers or RBs) within a carrier (e.g., "in-band" deployment of a narrowband protocol type).

In a system employing MCM techniques, a resource element may consist of one symbol period (e.g., a duration of one modulation symbol) and one subcarrier, where the symbol period and subcarrier spacing are inversely related. The number of bits carried by each resource element may depend on the modulation scheme (e.g., the order of the modulation scheme). Thus, the more resource elements that a UE 115 receives and the higher the order of the modulation scheme, the higher the data rate may be for the UE 115. In MIMO systems, a wireless communications resource may refer to a combination of a radio frequency spectrum resource, a time resource, and a spatial resource (e.g., spatial layers), and the use of multiple spatial layers may further increase the data rate for communications with a UE 115.

Devices of the wireless communications system 100 (e.g., base stations 105 or UEs 115) may have a hardware configuration that supports communications over a particular carrier bandwidth, or may be configurable to support communications over one of a set of carrier bandwidths. In some examples, the wireless communications system 100 may include base stations 105 and/or UEs 115 that support simultaneous communications via carriers associated with more than one different carrier bandwidth.

Wireless communications system 100 may support communication with a UE 115 on multiple cells or carriers, a feature which may be referred to as carrier aggregation or multi-carrier operation. A UE 115 may be configured with multiple downlink component carriers and one or more uplink component carriers according to a carrier aggregation configuration. Carrier aggregation may be used with both FDD and TDD component carriers.

In some cases, wireless communications system 100 may utilize enhanced component carriers (eCCs). An eCC may be characterized by one or more features including wider carrier or frequency channel bandwidth, shorter symbol duration, shorter TTI duration, or modified control channel configuration. In some cases, an eCC may be associated with a carrier aggregation configuration or a dual connectivity configuration (e.g., when multiple serving cells have a suboptimal or non-ideal backhaul link). An eCC may also be configured for use in unlicensed spectrum or shared spectrum (e.g., where more than one operator is allowed to use the spectrum). An eCC characterized by wide carrier bandwidth may include one or more segments that may be utilized by UEs 115 that are not capable of monitoring the whole carrier bandwidth or are otherwise configured to use a limited carrier bandwidth (e.g., to conserve power).

In some cases, an eCC may utilize a different symbol duration than other component carriers, which may include use of a reduced symbol duration as compared with symbol durations of the other component carriers. A shorter symbol duration may be associated with increased spacing between adjacent subcarriers. A device, such as a UE 115 or base station 105, utilizing eCCs may transmit wideband signals (e.g., according to frequency channel or carrier bandwidths of 20, 40, 60, 80 MHz, etc.) at reduced symbol durations (e.g., 16.67 microseconds). A TTI in eCC may consist of one or multiple symbol periods. In some cases, the TTI duration (that is, the number of symbol periods in a TTI) may be variable.

Wireless communications system 100 may be an NR system that may utilize any combination of licensed, shared, and unlicensed spectrum bands, among others. The flexibility of eCC symbol duration and subcarrier spacing may allow for the use of eCC across multiple spectrums. In some examples, NR shared spectrum may increase spectrum utilization and spectral efficiency, specifically through dynamic vertical (e.g., across the frequency domain) and horizontal (e.g., across the time domain) sharing of resources.

In some cases, the wireless communications system 100 may be an example of a wireless backhaul communications network, such as an IAB network. An IAB network may include an IAB donor (or anchor) node and one or more relay nodes downstream from the donor node. In some aspects, an IAB network shares resources between access and backhaul links such that access traffic may be relayed on wireless backhaul. In some cases, the same technology may be used for access links and backhaul links. IAB donor nodes may provide access to child UEs and the wireless backhaul functionality to IAB nodes. An IAB donor may include a CU for control of the IAB-network and one or more DUs for scheduling of child IAB nodes. An IAB donor may have a wireline connection to the core network 130. Downstream from the IAB donor node may include one or more IAB nodes (also referred to as parent nodes, relay nodes, or child nodes, depending upon where the node is within the IAB network) within the IAB network, with each wirelessly relaying traffic of its child nodes (e.g., UEs, or other IAB nodes), to the parent node (e.g., IAB donor, or IAB node). A UE 115 may connect wirelessly to a donor or IAB node that is within range of the UE 115. In some cases, a base station 105 may be an example of an IAB node.

Wireless communications systems described herein, such as wireless communications system 100, may support network coding operations at intermediate nodes. For example, an intermediate node may receive unencoded or raw data packets and perform network coding, such as fountain coding, to generate encoded packets. The intermediate node may then distribute the packet segments among a set of paths to the receiving UE 115. Encoding at the intermediate node and transmitting the packet segments using the set of paths may be robust against blockage or congestion at a particular node and establish clear end points (e.g., receiver and transmitter) for the encoded packets.

In some cases, the intermediate node may perform network decoding to reduce feedback latency. For example, the IAB intermediate node may decode received packet segments (e.g., fountain coded packets) and report whether decoding is successful to prompt retransmission by the sender. This may improve the rate of providing feedback, as the IAB intermediate node may send feedback instead of sending the packets one or more hops to the IAB access node and having the IAB access node being solely responsible for providing feedback. Additionally, the IAB intermediate node may perform network decoding on received encoded packets, and then transmit the decoded packets to other (e.g., downstream) nodes. For example, an IAB intermediate node may decode a number of encoded packets, and may transmit one or more decoded packets via a first wireless link and one or more other decoded packets via a second wireless link. In some examples, the IAB intermediate node may transmit the packets along one or more paths via the wireless links, and the packets may include a same path identifier or different path identifiers.

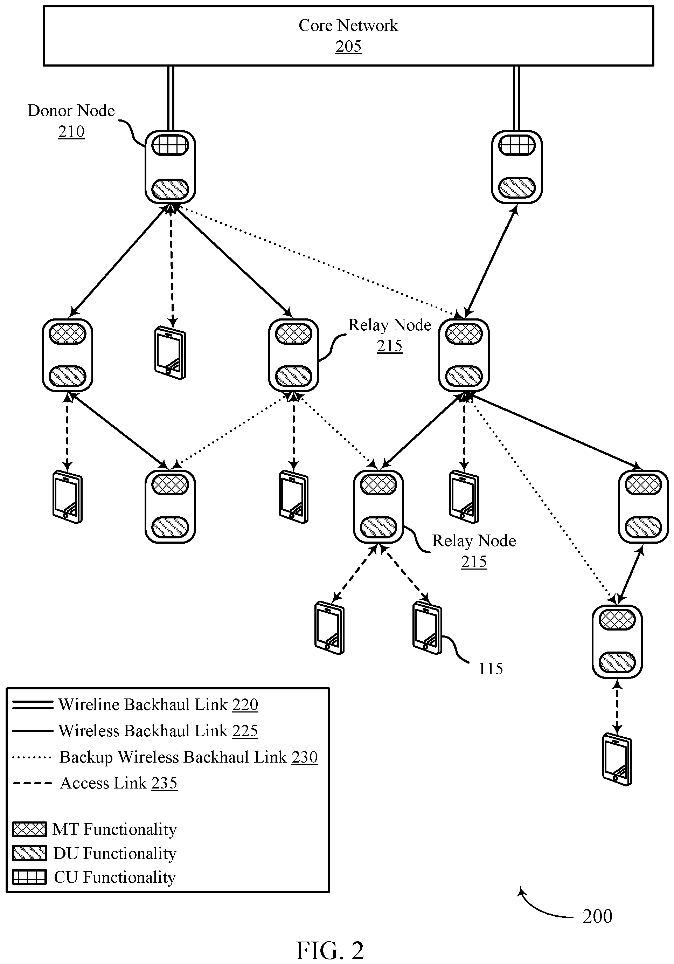

**FIG. 2** illustrates an example of a wireless communications system 200 that supports reducing feedback latency for network coding in wireless backhaul communications networks in accordance with aspects of the present disclosure. Wireless communications system 200 (e.g., an NR system, a mmW system, etc.) may supplement wireline backhaul connections (e.g., wireline backhaul links 220) by sharing infrastructure and spectral resources for network access with wireless backhaul link capabilities, providing an IAB network architecture. Wireless communications system 200 may include a core network 205 and base stations 105 or supported devices split into one or more support entities (i.e., functionalities) for promoting wireless backhaul density in collaboration with communication access. Aspects of the supporting functionalities of the base stations 105 may be referred to as IAB nodes, such as IAB donor nodes 210 and IAB relay nodes 215. Wireless communications system 200 may additionally support a number of UEs 115, which may communicate on the uplink with one or more IAB donor nodes 210, IAB relay nodes 215, or a combination of these devices. In some examples, wireless communications system 200 may implement aspects of wireless communications system 100.

Wireless communications system 200 may include one or more IAB donor nodes 210, which may interface between a wireline network and a wireless network. In some cases, an IAB donor node 210 may be referred to as an anchor node, as the IAB donor node 210 anchors the wireless network to a wireline connection. For example, each IAB donor node 210 may include at least one wireline backhaul link 220 and one or more additional links (e.g., wireless backhaul links 225, backup wireless backhaul links 230, access links 235, etc.). An IAB donor node 210 may be split into associated base station central unit (CU) and distributed unit (DU) entities, where one or more DUs associated with an IAB donor node 210 may be partially controlled by an associated CU. CUs of IAB donor nodes 210 may host layer 3 (L3) (e.g., RRC, service data adaption protocol (SDAP), PDCP, etc.) functionality and signaling. Further, CUs of IAB donor nodes 210 may communicate with the core network 205 over a wireline backhaul link 220 (e.g., which may be referred to as an NG interface). DUs may host lower layer operations, such as layer 1 (L1) or layer 2 (L2) (e.g., RLC, MAC, physical layer, etc.) functionality and signaling. A DU entity of an IAB donor node 210 may support a serving cell within the network coverage area according to connections associated with wireless backhaul links 225 and access links 235 of the IAB network. DUs of the IAB donor nodes 210 may control both access and backhaul links within the corresponding network coverage and may provide controlling and scheduling for descendant (i.e., child) IAB relay nodes 215 and or UEs 115. For example, a DU may support an RLC channel connection with a UE 115 (e.g., via an access link 235) or with an IAB relay node 215 (e.g., via a backhaul link, such as a primary wireless backhaul link 225 or a backup wireless backhaul link 230).

IAB relay nodes 215 may be split into associated mobile terminal (MT) and base station DU entities, where MT functionality of the IAB relay nodes 215 may be controlled or scheduled by antecedent (i.e., parent) IAB nodes via wireless backhaul links. A parent node to an IAB relay node 215 may be another (antecedent) IAB relay node 215 or a donor node 210. The MT functionality may be similar to functionality performed by UEs 115 in the system. An IAB relay node 215 may not be directly connected to a wireline backhaul 220. Instead, the IAB relay node 215 may connect to the core network 205 via other IAB nodes (e.g., any number of additional IAB relay nodes 215 and an IAB donor node 210) using wireless backhaul links. The IAB relay node 215 may transmit upstream (e.g., towards the core network 205) in the IAB system using MT functionality. In some cases, DUs of the IAB relay nodes 215 may be partially controlled by signaling messages from CU entities of an associated IAB donor node 210 (e.g., transmitted via an F1-application protocol (AP)). The DUs of the IAB relay nodes 215 may support serving cells of the network coverage area. For example, a DU of an IAB relay node 215 may perform the same or similar functions as a DU of an IAB donor node 210, supporting one or more access links 235 for UEs 115, one or more wireless backhaul links for downstream IAB relay nodes 215, or both.

Wireless communications system 200 may employ relay chains for communications within the IAB network architecture. For example, a UE 115 may communicate with an IAB node, and the IAB node may relay the data to a base station CU or the core network 205 either directly or via one or more IAB relay nodes 215. Each IAB relay node 215 may include a primary wireless backhaul link 225 for relaying data upstream or receiving information from a base station CU or the core network 205. In some cases, an IAB relay node 215 may additionally include one or more backup wireless backhaul links 230 (e.g., for redundant connectivity or improved robustness). If the primary wireless backhaul link 225 fails (e.g., due to interference, malfunction at a connected IAB node, movement of IAB nodes, maintenance at IAB nodes, etc.), an IAB relay node 215 may utilize a backup wireless backhaul link 230 for backhaul communication within the IAB network. The first (e.g., primary) wireless backhaul link 225 may be associated with a coverage area and MT functionality may be controlled or scheduled by a first parent node. The one or more secondary backhaul links (e.g., backup wireless backhaul links 230) may be associated with a non-collocated coverage area and controlled or scheduled by one or more parent nodes. Each of the primary backhaul connections and the one or more secondary connections may support spectral capabilities to provide network communication over one or more RATs. The one or more IAB nodes may further support base station DU entities and may support multiple backhaul and access links within the relay chain. The DU entities may control or schedule descendant IAB relay nodes 215 and UEs 115 within the IAB network (e.g., downstream in the IAB network) via the configured backhaul and access links. That is, an IAB relay node 215 may act as a relay between an IAB donor node 210 and one or more descendant devices (e.g., other IAB relay nodes 215, UEs 115, etc.) in both communication directions based on established backhaul and access connections.

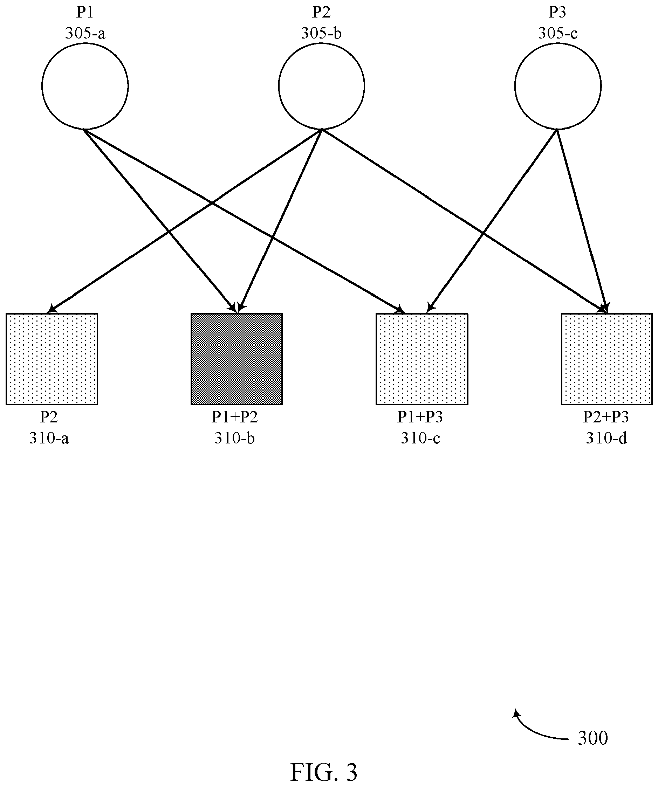

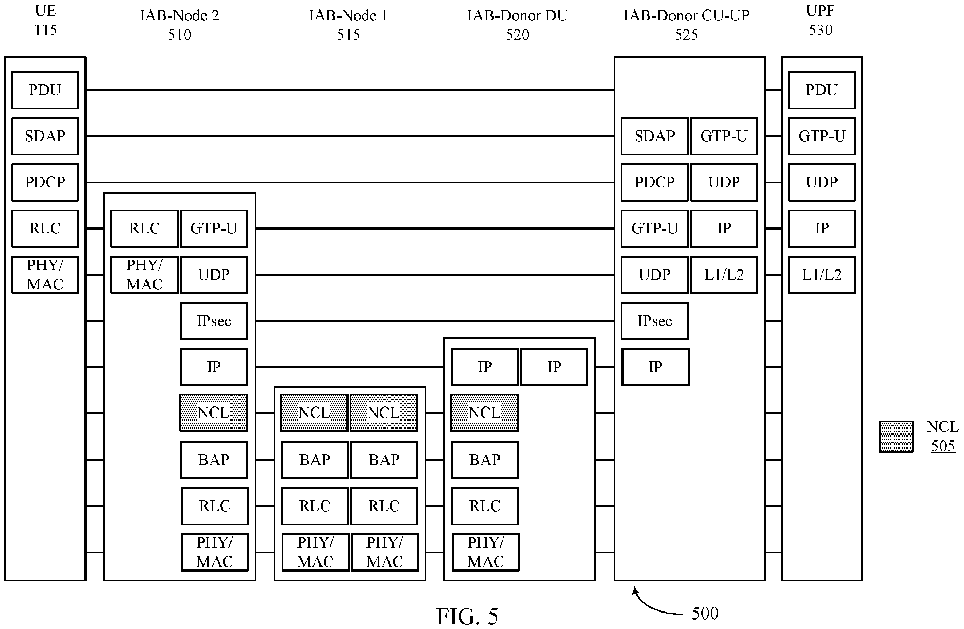

In some cases, the wireless communications system 200 may support network coding operations, such as fountain coding. Fountain coding may be used to improve robustness of packet transmissions. An example of fountain coding is described in more detail with reference to FIG. 3. In some conventional systems, fountain coding may be performed by network coding layers at the IAB access node (e.g., directly serving a UE 115) and at the IAB donor node 210, but not at IAB intermediate nodes (e.g., between the IAB access node and the IAB donor node 210). Limiting network coding to be performed by the IAB access node and IAB donor node 210 may degrade network performance, examples of which are described in greater detail in FIG. 5.

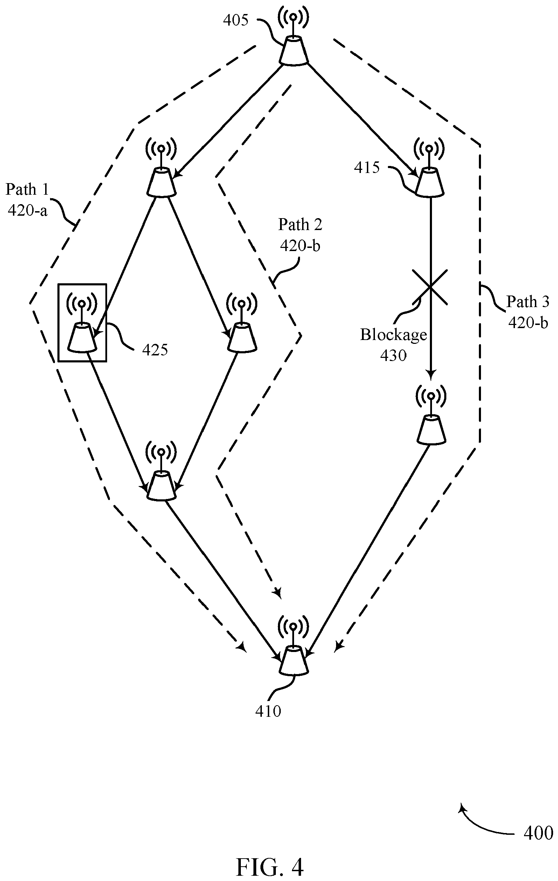

The wireless communications system 200, and other wireless communications systems implementing the techniques described herein, may support network coding at intermediate nodes. For example, an intermediate node may receive unencoded packets (e.g., RLC packet data units (PDUs)) and perform network coding (e.g., fountain coding) to generate encoded packets. The intermediate node may then distribute the packet segments among a set of paths to the receiving UE 115. Encoding at the intermediate node and transmitting the packet segments using the set of paths may be robust against blockage or congestion at a particular node, such as the examples described with reference to FIG. 4.

In another example, the intermediate node may perform network decoding to reduce feedback latency. For example, the IAB intermediate node may decode received packet segments (e.g., fountain coded packets) and report whether decoding is successful to prompt retransmission by the sender. This may improve the rate of providing feedback, as the IAB intermediate node may send feedback instead of sending the packets one or more hops to the IAB access node and having the IAB access node being solely responsible for providing feedback. Additionally, the IAB intermediate node may perform network decoding on received encoded packets, and then transmit the decoded packets to other (e.g., downstream) nodes. For example, an IAB intermediate node may decode a number of encoded packets, and may transmit one or more decoded packets via a first wireless link and one or more other decoded packets via a second wireless link. In some examples, the IAB intermediate node may transmit the packets along one or more paths via the first and/or second wireless links, and each packet may include a path identifier for the corresponding path.

**FIG. 3** illustrates an example of a coding procedure 300 that supports reducing feedback latency for network coding in wireless backhaul communications networks in accordance with aspects of the present disclosure. In some examples, coding procedure 300 may implement aspects of wireless communication system 100. The coding procedure 300 may be an example of fountain coding or another type of network coding. The coding procedure 300 may, in some cases, be performed at a network coding layer at an IAB node, such as an IAB donor node 210 or an IAB relay node 215 described with reference to FIG. 2.

A transmitting device may have K packets to send. In some cases, each packet may be a data segment or carry data for a receiver such as a UE 115. Each of the K packets may include data and may be referred to as raw packets or packets carrying raw data. In some cases, the packets at the transmitter may be RLC PDUs.

The transmitting device may perform a network coding procedure to encode the packets, such as by performing fountain encoding. The transmitting device may send a stream of encoded packets to the receiver, where each of the encoded packets may be generated from a subset of the K raw packets. In some cases, the encoded packets may be referred to as packet segments. The receiver may attempt to receive or recover the K raw packets after receiving a new encoded packet. The receiver may send a stop or an acknowledgment (e.g., acknowledgement (ACK)/negative acknowledgement (NACK) feedback) upon decoding the *K* packets. In some cases, the number of encoded packets (e.g., *N* encoded packets) may not be predetermined. For example, the transmitter may generate packets using the *K* packets until receipt of an acknowledgment or a stop indicator. In some cases, information about the encoded symbols may be shared with the receiver to enable decoding. For example, data from the *K* packets may be encoded into packet or packet segments according to a known pattern or configuration. The receiver may then know which raw data packets are in a first encoded packet, a second encoded packet, etc.

In the example of the coding procedure 300, the transmitter may have three raw packets (e.g., P1 305-a, P2 305-b, and P3 305-c). The transmitter may send a first encoded packet 310-a to the receiver. The first encoded packet 310-a may include data for P2 305-b. Upon receipt of the first encoded packet 310-a, the receiver may have data for P2 305-b.

The transmitter may send a second encoded packet 310-b to the receiver. The second encoded packet 310-b may include or be based on data for P1 305-a and P2 305-b. However, the receiver may not receive the second encoded packet 310-b. For example, there may be interference on the channel carrying the second encoded packet 310-b, there may be a blockage, or there may be a congested node between the devices. In some examples, the receiver may still monitor for new packets (e.g., without sending a NACK) despite a failed receipt of the second encoded packet 310-b.

The transmitter may send a third encoded packet 310-c to the receiver. The third encoded packet 310-c may include data for P1 305-a and P3 310-c. The receiver, upon receipt of the third encoded packet 3 10-c, may not be able to derive information from the third encoded packet 310-c, as the receiver may only have the data for P2 305-b from the first packet 310-a. The transmitter may send a fourth encoded packet 310-d including data for P2 305-b and P3 305-c. The receiver may successfully receive the fourth encoded packet 310-d.

The receiver may determine the data for P3 305-c based on the first encoded packet 310-a and the fourth encoded packet 310-d. For example, the receiver may decode P3 305-c by removing the value of P2 305-b from the fourth encoded packet 310-d, leaving just the data for P3 305-c. Once the receiver has the data for P3 305-c, the receiver may decode P1 305-a from the third encoded packet 310-c. Therefore, despite not successfully receiving the second encoded packet 310-b, the receiver may still successfully decode the *K* packets 305.

In the example of the coding procedure 300, four encoded packets may be transmitted before the three original packets are decoded. The receiver may then send an acknowledgment to the transmitter. In this example, the rate may be 3/4 (e.g., 3 raw data packets sent in 4 encoded packets). The rate may be variable based on how many encoded packets the transmitter sends before receiving the acknowledgment.

In some cases, after decoding the encoded packets, the receiving device may transmit one or more of the decoded packets to one or more (e.g., downstream) devices. For example, the receiving device may decode a first encoded packet and may transmit the first decoded packet via a first wireless link and along a first path (e.g., of a plurality of paths). The first decoded packet may include a path identifier for the first path. Similarly, the receiving device may decode a second encoded packet and may transmit the second decoded packet via a second wireless link and along a second path (e.g., of the plurality of paths). The second decoded packet may include a path identifier for the second path. In some examples, the first and second wireless links may be the same, but the first path may be different from the second path. In some examples, the first and second wireless links may be different, and the first path may be different from the second path.

**FIG. 4** illustrates an example of a transmission path configuration 400 that supports reducing feedback latency for network coding in wireless backhaul communications networks in accordance with aspects of the present disclosure. In some examples, transmission path configuration 400 may implement aspects of wireless communication system 100.

A transmitter 405 may exploit spatial diversity in a network by sending encoded packets to a receiver 410 on different paths 420. A path 420 may include one or more hops of intermediate nodes 415. In some cases, the transmitter 405 may be an example of an IAB node such as an IAB donor node or an IAB relay node as described with reference to FIG. 2. The receiver 410 may be an example of a UE 115, an IAB access node, or an IAB relay node. An intermediate node 415 may be an example of an IAB node, such as an IAB relay node.

In some cases, sending encoded packets on different paths 420 may improve robustness of a wireless communications system. For example, the wireless communications system may adapt to lost packets due to link failure or temporary link blockages. These techniques may also enable the wireless communications system to adapt to lost packets due to congestion at an intermediate node. In some cases, the order of arrival of encoded symbols at the receiver 410 may not be critical. In some examples, the total count of raw packets and encoded packets (e.g., corresponding to a rate) may be determined.

In some cases, the receiver 410 may provide a common acknowledgment for *K* decoded original packets on an end-to-end basis. For example, once the receiver 410 receives a complete set of original packets of a data transmission, the receiver 410 may provide feedback (e.g., an ACK) for the original packets. Without the ACK, the transmitter 405 may continue to generate and transmit encoded packets among the different paths. In some cases, the common ACK for the packets may improve latency between the receiver 410 and the transmitter 405. In some cases, the common ACK may reduce signaling overhead and network energy consumption. In some examples, the receiver 410 may send a NACK if some packets are not received (e.g., after a threshold of period time).

In the example of the transmission path configuration 400, there may be three different paths 420 between the transmitter 405 and the receiver 410 . For example, a first path 420-a may have three intermediate nodes 415, and one of the intermediate nodes 415 may be a congested node 425. The congested node 425 may lead to transmission delays or failures along the first path 420-a. A second path 420-b may also have three intermediate nodes 415 (e.g., and a common first hop to intermediate node to the first path 420-a), but the second path 420-b may not use the congested node 425. A third path 420-b may have two intermediate nodes 415, but there may be a blockage 430 between the two intermediate nodes 415. The blockage 430 may cause delays or transmission failures on the third path 420-c.

By utilizing spatial transmission diversity and sending encoded packet segments on each of the three paths 420, throughput may be improved between the transmitter 405 and the receiver 410. For example, if signaling were only sent on the first path 420-a or the third path 420-c, the congested node 425 and the blockage 430 may significantly increase latency or cause major transmission failure. By utilizing all three paths, the transmitter 405 may still send some signaling through to the receiver 410. Then, by utilizing coding techniques (e.g., fountain coding as described with reference to FIG. 3), the receiver 410 may decode data transmissions from the transmitter 405 even if the receiver 410 does not successfully receive each encoded packet.

**FIG. 5** illustrates an example of a protocol stack 500 that supports reducing feedback latency for network coding in wireless backhaul communications networks in accordance with aspects of the present disclosure. In some examples, protocol stack 500 may implement aspects of wireless communication system 100.

The protocol stack 500 may show protocol stacks and network functionalities of multiple devices. For example, the protocol stack 500 may show different protocol stacks and layers for a UE 115. The protocol stack 500 may also show different protocol stacks and layers for IAB nodes, such as IAB donor nodes, IAB relay nodes, and IAB access nodes. For some IAB nodes, the protocol stacks may be split between the DU and the MT or the DU and the CU.

The protocol stack 500 may show how different entities at different devices interact as a transmission is sent from a transmitter (e.g., an IAB donor node) to a receiver (e.g., a UE 115) in an IAB network, which may include transmission sent over one or more intermediate nodes. The protocol stack 500 may include a UE 115, IAB node 510 and IAB node 515, IAB donor DU 520, IAB donor CU 525, and a user plane function (UPF) 530.

Wireless communications systems implementing the techniques described herein may support network coding. Network coding may be transparent to a UE 115, such that the UE 115 may be agnostic of the network coding or where the network coding occurs. Some systems may have a network coding layer (NCL) (e.g., an NCL 505) on top of a backhaul adaptation protocol (BAP) layer between an IAB donor DU 520 and the access IAB node MT (e.g., of an IAB node 510). The BAP layer may perform routing and bearer mapping. The BAP may be IAB node configurable with a mapping from a BAP routing identifier to an egress link. In some cases, the BAP may be IAB node configurable with a mapping from an ingress RLC channel to an egress RLC channel. A BAP routing identifier carried in a BAP header may include a BAP address (e.g., for an IAB node or IAB donor DU) and a BAP path identifier. The BAP path identifier may indicate a path for the packet flow to follow. A destination IAB node or IAB donor DU address or path identifier may be unique within an IAB donor CU. In some cases, the BAP address of an IAB node may be used to differentiate traffic to be delivered to the upper layers from traffic to be delivered to egress RLC channels. For example, an IAB node may receive data packets, check a BAP header for the data packets, and determine whether to send the data to an upper layer, whether to perform network encoding or decoding, or whether to send the data packets along a path as indicated by the BAP information.

As described herein, the NCL 505 at the IAB donor DU 520 may encode *K* IP packets into *N* segments. The encoded segments may be assigned different BAP path identifiers and thus traverse different paths between the donor DU and the access IAB node (e.g., as routed by the BAP layer). The receiver may recover the original packets when enough encoded packets are collected such that the receiver can decode or reassemble the original packets. The reassembled packets may be delivered to the upper layers at the access IAB node and sent to the UE 115 (e.g., on the PHY and RLC layers).

In some conventional systems, only the IAB donor DU 520 and the MT of the access IAB Node 510 may use the NCL 505 to encode or decode encoded packet segments. However, these conventional techniques may not work with multiple data paths to the UE 115 that have different donor DUs. Additionally, the conventional techniques may not work across cell groups for a multi-connected UE 115 (e.g., with multiple access IAB nodes). The end-to-end feedback of these systems may severely increase latency for a long chain of intermediate nodes between the access IAB node and the donor IAB DU.

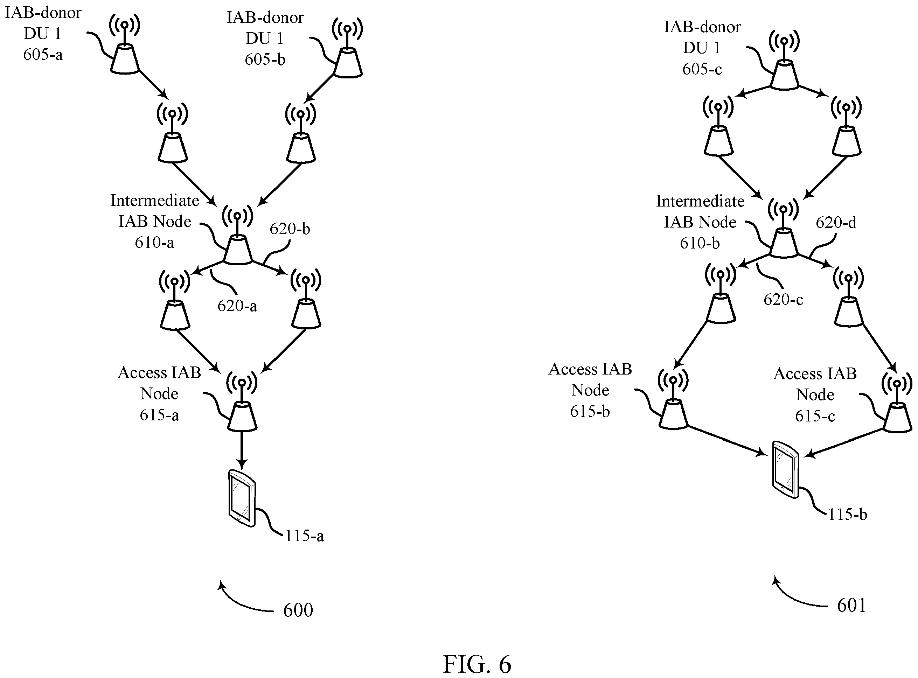

To improve latency and robustness, intermediate nodes (e.g., an intermediate IAB node 515) may also use the NCL 505 to encode or decode packet segments. The NCL 505 at the intermediate node 515 may also be on top of the BAP layer. In some cases, the NCL 505 at the intermediate node 515 may be activated or deactivated. For example, in some cases, network coding and decoding may be integrated into the BAP layer of the intermediate node 515. By utilizing the NCL 505 at the intermediate IAB node 515, the intermediate IAB node 515 may enable network coding for multiple data paths to the UE 115 that use different donor DUs. An example of network coding with multiple data paths to a UE 115 from different donor DUs is described in more detail with reference to wireless communications system 600 of FIG. 6. Additionally, utilizing the NCL 505 at the intermediate IAB node 515 may reduce feedback latency and improve the code rate.

For a specific flow of RLC PDUs (e.g., from a donor IAB node to a UE 115), the NCL 505 (e.g., a linear network coder/decoder or fountain coder/decoder) may be used at multiple devices. For example, there may be a bearer between the NCLs 505 of an access IAB node MT and an IAB donor DU, an access IAB node MT and an intermediate IAB node DU, and an intermediate IAB node MT and an IAB donor DU.

In a first example, network coding may be activated for the set of RLC PDUs at the intermediate node 515. The intermediate IAB node 515 may receive raw RLC PDUs on an ingress link or RLC channel and encode the PDUs (e.g., packet segments) using a linear network coding or fountain coding operation. The intermediate IAB node 515 may send the encoded PDUs on one or more egress links or RLC channels. The encoded segments may be associated with different BAP path identifiers. In some cases, the encoded segments may be assigned different BAP path identifiers unevenly as configured by the CU of the IAB donor node. The BAP layer may route the packet segments to different paths as described with reference to FIG. 3. The intermediate IAB node 515 may receive feedback based on the transmitted PDUs. In this first example, the network coding may occur at the intermediate node 515 instead of the IAB donor DU 520. The IAB donor DU 520 may, instead, directly send the RLC PDUs to the intermediate IAB node 515. The first example may, in some cases, increase robustness of the communication link between the IAB donor node and the UE 115 and support communications on multiple paths from different IAB donor nodes to the UE 115 based on the intermediate IAB node 515 performing the network coding (e.g., instead of the different IAB donor nodes performing the coding).

In the first example, when the intermediate IAB node 515 receives RLC PDUs, the intermediate IAB node 515 may determine whether to deliver the PDUs to the network coding layer or forward the PDUs to an egress link or RLC channel based on a CU configuration. For example, the intermediate IAB node 515 may either perform network coding on the RLC PDUs or forward the PDUs based on path information and a CU configuration for the PDUs. In some cases, the CU configuration may define one or more conditions or mappings for a set of parameters such as, for example, one or more conditions on a BAP address of the incoming PDU, a BAP path identifier of the incoming PDU, an ingress link or RLC channel indicator, and an egress link or RLC channel identifier. For example, the CU configuration may provide one or more conditions to indicate whether a PDU, carrying a particular BAP address and path ID, and arriving on a particular link or channel, is to be sent to upper layers (e.g., potentially for network coding) or forwarded to a particular egress link/channel. This information in the CU configuration may indicate to the intermediate IAB node 515 where to send the RLC PDU or encoded packet segments (e.g., on which path or to an upper layer).

In a second example, the intermediate IAB node 515 may receive encoded RLC PDUs on one or more ingress links or RLC channels. The encoded PDUs may be associated with different BAP path identifiers and may carry BAP path identifier information in their headers. The intermediate IAB node 515 may recover the original raw PDUs using a decoding operation of a linear network code or fountain code. The intermediate IAB node 515 may then send feedback on an egress link or RLC channel based on the success of the decoding operation. This second example may, in some cases, improve latency for providing feedback. For example, the intermediate IAB node 515 may check whether any packet segments were lost (e.g., due to blockages or congested nodes) instead of the access IAB node 510, which may be several hops away.

In some cases, the intermediate IAB node 515 may decode (e.g., via network decoding) the encoded PDUs to recover the original raw PDUs, and may transmit the raw PDUs to other (e.g., downstream) devices in the network. For example, the intermediate IAB node 515 may transmit one or more raw PDUs via wireless links along one or more paths (e.g., of a plurality of paths). The intermediate IAB node 515 may transmit one or more raw PDUs along a first path via a first wireless link, and one or more raw PDUs along a second path via a second wireless link. The first path may be different from the second path, and the first wireless link may be different from, or the same as, the second wireless link. In some examples, each PDU may include a path identifier.

When network coding is deactivated at an intermediate IAB node 515 for a set of RLC PDUs, the BAP layer may route (e.g., map) the incoming PDUs of the set to an egress, or outgoing, link (e.g., an RLC channel) based on a routing configuration for the set (e.g., a bearer mapping). In this example, the intermediate IAB node 515 may check the BAP address of the incoming PDUs, find a mismatch against its own BAP address, and forward the PDUs to an egress RLC channel (e.g., instead of delivering the traffic to the upper layers). In this example of network coding at the intermediate IAB node 515 being deactivated, if the intermediate IAB node 515 is not the access IAB node, then the intermediate IAB node 515 may forward received packet segments along a path as indicated by header information of the packet segments.

In some cases, network coding functionality activation and deactivation may be determined by the IAB donor CU 525. For example, the IAB donor CU 525 may activate or deactivate the NCL 505 at the IAB intermediate node 515. The IAB donor node CU 525 may indicate the activation or deactivation based on the BAP address or backhaul RLC channel. The activation or deactivation may be periodic or triggered based on an event. In an example, the activation or deactivation may be triggered based on a modification of the network topology. For example, if a node is added (e.g., node integration) or removed (e.g., node disintegration), if a UE 115 is triggered for a handover, or if a path (e.g., between the UE and the donor IAB node) is created, released, or modified, then network coding may be triggered to be activated or deactivated for one or more IAB nodes of the IAB network. Network coding may be triggered by reports from UEs 115 or by IAB node MTs indicating a radio link failure (RLF). In some cases, network coding may be triggered based on buffer status reports indicating congestion at IAB nodes. In some examples, network coding may be activated based on an establishment, release, or modification of RLC channels. Intermediate nodes may receive an encoder/decoder configuration via RRC signaling or Fl-AP interface messages.

In some cases, an intermediate node may buffer data prior to enabling network coding. The amount of data to buffer may be configured by the CU of the donor IAB node. The amount of available data may be a trigger to activate or deactivate network coding. For example, if an intermediate IAB node determines that an amount of data for one or more received packets of a packet flow satisfies a network coding threshold, the intermediate IAB node may perform a network encoding operation on the received packets of the packet flow.

**FIG. 6** illustrates examples of wireless communications systems 600 and 601 that support reducing feedback latency for network coding in wireless backhaul communications networks in accordance with aspects of the present disclosure. In some examples, the wireless communications systems 600 and 601 may implement aspects of wireless communication systems 100 or 200.

The wireless communications system 600 may be an example of an IAB network with multiple IAB donor DUs 605. For example, data for UE 115-a may be transmitted by IAB donor DU 605-a and IAB donor DU 605-b. The data from the IAB donor DUs 605 may be transmitted along intermediate IAB nodes 610 to access IAB node 615-a, and access IAB node 615-a may transmit the data to UE 115-a. In some examples, the devices in the wireless communications system 600 may communicate via wireless communication links, such as wireless links 620-a and 620-b.

Network coding at intermediate IAB nodes 610 may be enabled. Without network coding at the intermediate nodes 610, encoded packets (e.g., packet segments) may not have a common source and a common destination, as the wireless communications system 600 may have two separate IAB donor DUs 605. By implementing the techniques described herein, the common source for the packet segments may be intermediate IAB node 610-a, and the common destination for the packet segments may be access IAB node 615-a.

In an example, IAB donor DU 605-a and IAB donor DU 605-b may send RLC PDUs to intermediate IAB nodes 610, arriving at intermediate IAB node 610-a. Intermediate IAB node 610-a may perform network encoding (e.g., fountain coding) to generate packet segments. Intermediate IAB node 610-a may then transmit the packet segments on different paths to access IAB node 615-a. Access IAB node 615-a may receive the packet segments, decode the packet segments, and send the data to a higher layer to transmit to UE 115-a. By implementing these techniques, network coding and decoding may be supported for IAB systems with multiple IAB donor DUs.

Supporting network coding and decoding at intermediate nodes may also shorten a feedback loop in the wireless communications system 600. For example, instead of access IAB node 615-a providing feedback all the way back to an IAB donor DU 605, access IAB node 615-a may provide feedback to intermediate IAB node 610-a. Therefore, the end-to-end feedback latency may have fewer hops than systems without network coding and decoding at intermediate nodes. Once access IAB node 615-a can recover the original PDUs from the packet segments transmitted by intermediate IAB node 610-a, then access IAB node 615-a may send an acknowledgment to intermediate IAB node 610-a.

Additionally, in some examples, after decoding the received packets or packet segments, intermediate IAB node 610-a may transmit packets including the original PDUs to other devices in the network, such as access IAB node 615-a. In some cases, intermediate IAB node 610-b may transmit multiple packets along paths via wireless links. For example, intermediate IAB node 610-b may transmit a first packet (e.g., a first decoded packet of the received encoded packets) to a downstream node via wireless link 620-a. The first packet may be transmitted along a first path and may include a packet identifier for the first path. Intermediate IAB node 610-b may transmit a second packet (e.g., a second decoded packet of the received encoded packets) to a downstream node via wireless link 620-b. The second packet may be transmitted along a second path and may include a packet identifier for the second path. In some examples, the first and second packets may be transmitted via the same wireless link (e.g., wireless link 620-a or 620-b), but along different paths (e.g., the first path is different from the second path). In some cases, the paths may diverge further downstream (e.g., in subsequent IAB nodes) before reaching a destination.

Some systems without intermediate node network coding may waste resources to generate redundant encoded segments in the period after the original packets are successfully decoded at the receiver and before the acknowledgment is received by the sender. By having fewer hops, there may be a reduced latency between access IAB node 615-a recovering the original packets and intermediate IAB node 610-a receiving the acknowledgment. Additionally, the longer the chain between the sender of the packet segments and the receiver, the smaller the chance that an encoded segment is correctly received and the longer it takes until the original segments are recovered and an acknowledgment is issued. For example, there may be fewer hops between the sender (e.g., intermediate node 610-a) and the receiver (e.g., access IAB node 615-a), which may lead to fewer chances that there is a blockage or congested node on a path between the devices.

The wireless communications system 601 may be an example of an IAB network with multiple access IAB nodes 615. For example, data for UE 115-a may be transmitted by IAB donor DU 605-c along intermediate IAB nodes 610 to access IAB node 615-b and access IAB node 615-c. The access IAB nodes 615 may then transmit the data to UE 115-a. In some examples, the devices in the wireless communications system 601 may communicate via wireless communication links, such as wireless links 620-c and 620-d.

Network coding at intermediate IAB nodes 610 may be enabled in the wireless communications system 601. Without network coding at the intermediate nodes 610, encoded packets (e.g., packet segments) may not have a common source and a common destination, as the wireless communications system 600 may have two access IAB nodes 615. By implementing the techniques described herein, the common source for the packet segments may be IAB donor DU 605-c, and the common destination for the packet segments may be intermediate IAB node 610-b.

In an example, IAB donor DU 605-c may perform network encoding on RLC PDUs to generate packet segments (e.g., encoded packets). IAB donor DU 605-c may send the packet segments to the intermediate IAB nodes 610, being routed to intermediate IAB node 610-b. Intermediate IAB node 610-b may perform network decoding (e.g., fountain decoding) to reassemble the RLC PDUs. Intermediate IAB node 610-b may then transmit the RLC PDUs along intermediate IAB nodes 610 to the access IAB nodes 615. Access IAB node 615-b may then send some of the data to UE 115-b, and access IAB node 615-c may send some of the data to UE 115-b. In some cases, the data may be sent by one access IAB node 615. By implementing these techniques, network coding and decoding may be supported for IAB systems with a multi-connected UE 115.

Supporting network coding and decoding at intermediate nodes may also shorten a feedback loop in the wireless communications system 601. For example, instead of an access IAB node 615 providing feedback all the way back to IAB donor DU 605-c, intermediate IAB node 610-b may provide feedback to IAB donor DU 605-c. Therefore, the end-to-end feedback latency may have fewer hops than systems without network coding and decoding at intermediate nodes. Once intermediate IAB node 610-b can recover the original PDUs from the packet segments transmitted by IAB donor DU 605-c, then intermediate IAB node 610-b may send an acknowledgment to IAB donor DU 605-c.

Additionally, in some examples, after decoding the received packets or packet segments, intermediate IAB node 610-b may transmit packets including the original PDUs to other devices in the network, such as access IAB nodes 615-b and/or 615-c. In some cases, intermediate IAB node 610-b may transmit multiple packets along paths via wireless links. For example, intermediate IAB node 610-b may transmit a first packet (e.g., a first decoded packet of the received encoded packets) to a downstream node via wireless link 620-c. The first packet may be transmitted along a first path and may include a packet identifier for the first path. Intermediate IAB node 610-b may transmit a second packet (e.g., a second decoded packet of the received encoded packets) to a downstream node via wireless link 620-d. The second packet may be transmitted along a second path and may include a packet identifier for the second path. In some examples, the first and second packets may be transmitted via the same wireless link (e.g., wireless link 620-c or 620-d), but along different paths (e.g., the first path is different from the second path). In some cases, the paths may diverge further downstream (e.g., in subsequent IAB nodes) before reaching a destination.

In some cases, the network coding configuration for the intermediate IAB node 610 may be configured by a CU of the IAB donor node. For example, the CU of the IAB donor node may indicate an encoding configuration and a decoding configuration for the network coding scheme to the intermediate IAB node 610. The CU of the IAB donor node may also indicate which data flows the intermediate IAB node 610 is to perform network coding. For example, the intermediate IAB node 610 may receive a set of raw data packets. The intermediate IAB node 610 may determine to perform network coding on the raw data packets, in some cases based on header information of the raw data packets or another configuration indicated by the CU of the IAB donor node.

In some examples, routing information for the packet segments may be configured by a CU at the IAB donor node. For example, packets from the CU of the IAB donor node may indicate a data path for a PDU (e.g., a raw packet) or a segmented packet. The routing information may be identified at a BAP layer of the intermediate IAB node 610. For example, the intermediate IAB node 610 may identify, based on the path identifiers, whether to perform network encoding or decoding. In some cases, the intermediate IAB node 610 may identify a path on which to transmit received data (e.g., raw packets or segmented packets). For example, the intermediate IAB node 610 may identify a BAP identifier of a segmented packet and determine whether to performing network coding or whether to forward the segmented packet to another intermediate node corresponding to the BAP identifier. In some cases, the BAP identifier may indicate a path for the packets to be sent on to a receiving device (e.g., via one or more other intermediate IAB nodes 610).

If the intermediate node 610 receives raw data packets and performs network coding to generate encoded packets (e.g., encoded packet segments), the intermediate node 610 may identify paths for the encoded packets. In some cases, the paths for the encoded packets may be based on a priority among the paths. In an example, a first path may be identified to have fewer obstructions or overloaded nodes than other paths, and the intermediate node 610 may send more encoded packets on the first path than on the other paths. The intermediate node 610 may generate encoded packets and transmit the encoded packets on the one or more paths until the intermediate node 610 receives an acknowledgment, indicating that a receiving device (e.g., an access IAB node 615) has recovered the raw packets from the encoded packets.

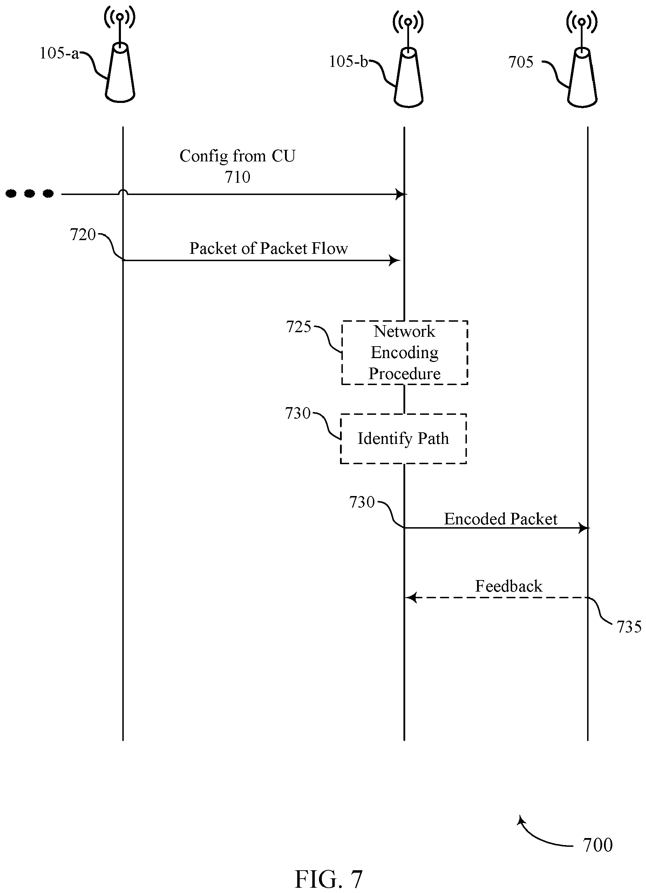

**FIG. 7** illustrates an example of a process flow 700 that supports reducing feedback latency for network coding in wireless backhaul communications networks in accordance with aspects of the present disclosure. In some examples, process flow 700 may implement aspects of wireless communication systems 100 or 200. The process flow 700 may include devices of a wireless backhaul communications network. For example, the process flow 700 may include base station 105-a and base station 105-b, which may each be an example of a base station 105 or an IAB node as described with reference to FIGs. 1 and 2 herein. In some cases, base station 105-b may be an example of an IAB relay node 215 as described with reference to FIG. 2, such as an intermediate IAB node. Base station 105-a may be an example of an IAB node and may be an example of a parent node to base station 105-b (e.g., or another node closer to the CU of the IAB donor node). The process flow 700 may include a receiver 705, which may be an example of a base station 105, such as an IAB node, or a UE 115 as described with reference to FIG. 1.

At 710, base station 105-b may receive, from a central unit node of the wireless backhaul communications network, a configuration indicating that network coding is activated for a packet flow. The packet flow may include one or more raw packets, such as RLC PDUs, which carry data for a UE 115. In some cases, the configuration may be received via RRC signaling or application protocol signaling.

At 715, base station 105-b may receive a first packet of the packet flow via a first wireless link from base station 105-a, which may be a second access node of the wireless backhaul communications network. In some cases, the first wireless link may be an example of an ingress link or an RLC channel. In some examples, base station 105-b may determine that an amount of data from one or more received packets of the packet flow satisfies a network coding threshold, and base station 105-b may perform a network encoding operation on the one or more received packets of the packet flow based on the network coding threshold being satisfied.

Base station 105-b may be an intermediate node between a sender of the packet flow (e.g., a DU of a donor IAB node) and a receiver of the packet flow (e.g., the receiver 705 or a UE 115 served by another IAB node). The techniques described herein support base station 105-b performing network coding as an intermediate node, which may improve feedback latency or robustness of the wireless backhaul communications network.

At 725, base station 105-b may perform a network encoding procedure to generate encoded packets from the received packets of the packet flow. For example, base station 105-b may network encode a first fraction of data of the packet flow that includes a first subset of packets of the packet flow to generate a first encoded packet, the first subset of packets including the first packet. In some cases, base station 105-b may network encode a second fraction of data of the packet flow that includes a second subset of packets of the packet flow to generate a second encoded packet. In some cases, fountain coding may be an example of the network coding procedure.

At 730, base station 105-b may identify a path for the packet flow. There may be multiple other IAB nodes in the wireless backhaul communications network, and base station 105-b may transmit the encoded packets on one of the paths. At 735, base station 105-b may transmit, via a second wireless link, the first encoded packet that is generated based on network encoding the first packet. In some cases, the configuration may indicate a path selection function, where the first encoded packet includes a path identifier of a first path of a set of different paths that is selected based on the path selection function, and the first encoded packet may be transmitted via the second wireless link along the first path. In some cases, base station 105-b may transmit the second encoded packet along a second path of a set of different paths that is selected based on the path selection function. Base station 105-b may transmit encoded packets on different paths to enhance spatial transmission diversity and, in some cases, increase the likelihood of a successful recovery of the encoded packets in cases of blockages or congested nodes on one of the paths.

In some cases, base station 105-b may receive feedback for the encoded packets. For example, at 735, base station 105-b may receive feedback indicating that each packet from a first fraction of data of the packet flow was successfully received. Base station 105-b may transmit a second encoded packet generated based on network encoding a second packet from a second fraction of data of the packet flow based on the feedback. For example, base station 105-b may receive an indication that some packets of the packet flow were successfully decoded at a receiver, and base station 105-b may then encode other packets of the packet flow into another encoded packet. Additionally, or alternatively, base station 105-b may receive feedback indicating that at least one packet of the fraction of data of the packet flow was not successfully received, and base station 105-b may transmit a second encoded packet that is generated based on network encoding the first packet in response to the feedback.

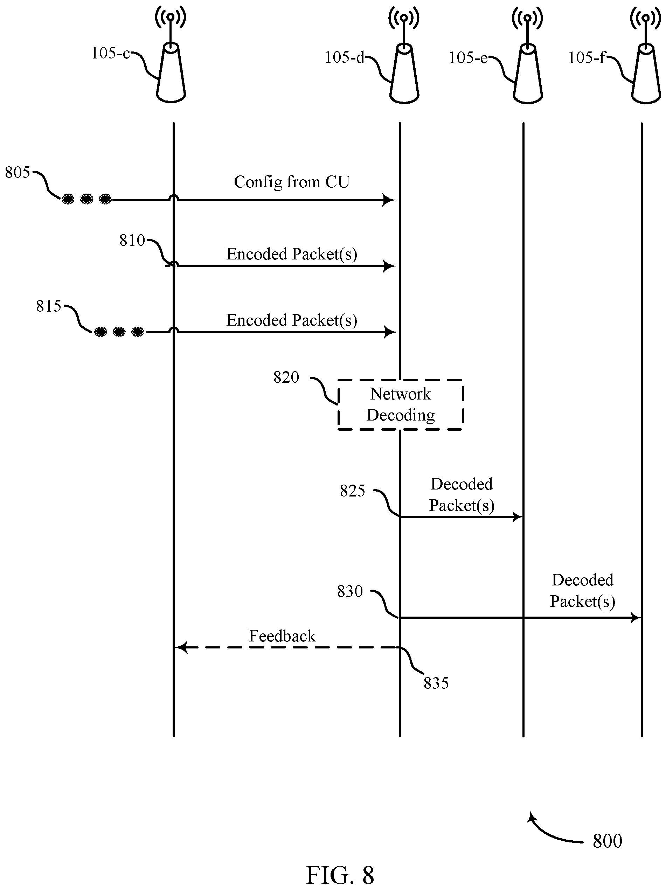

**FIG. 8** illustrates an example of a process flow 800 that supports reducing feedback latency for network coding in wireless backhaul communications networks in accordance with aspects of the present disclosure. In some examples, process flow 800 may implement aspects of wireless communication systems 100 or 200. The process flow 800 may include devices of a wireless backhaul communications network. For example, the process flow 800 may include base stations 105-c, 105-d, 105-e, and 105-f, which may each be an example of a base station 105 or an IAB node as described with reference to FIGs. 1 and 2 herein. In some cases, base station 105-d may be an example of an IAB relay node 215 as described with reference to FIG. 2, such as an intermediate IAB node. Base station 105-c may be an example of an IAB node and may be an example of a parent node to base station 105-d (e.g., or another node closer to the CU of the IAB donor node).

In some cases, a central entity node of a wireless backhaul communications network may identify an event to trigger activation of network coding functionality for a packet flow by a first access node of the wireless backhaul communications network. In some cases, the central entity node may transmit a configuration indicating that network coding is activated for the packet flow to a first access node, such as base station 105-d.

At 805, base station 105-d may receive, from a central unit node of the wireless backhaul communications network (e.g., the central entity node), a configuration indicating that network coding is activated for a packet flow. In some cases, the configuration may be received via RRC signaling or application protocol signaling.

At 810, and in some cases at 815, base station 105-d may receive, from one or more access nodes of the wireless backhaul communications network via one or more wireless links, a set of encoded packets of the packet flow.

In some cases, at 820, base station 105-d may perform a network decoding procedure on the set of encoded packets. Network decoding the set of encoded packets may include performing a linear network decoding operation or a fountain decoding operation on the set of encoded packets.

At 825, base station 105-d may transmit one or more decoded packets (e.g., decoded at 820) to a downstream node, such as base station 105-e. Base station 105-d may transmit the decoded packet(s) to base station 105-e via one or more wireless links along one or more paths. Each packet may include a path identifier for the corresponding path. For instance, base station 105-d may transmit a first decoded packet via a first wireless link along a first path, and the first decoded packet may include a path identifier for the first path.

At 830, base station 105-d may transmit another one or more decoded packets (e.g., decoded at 820) to another downstream node, such as base station 105-f. Base station 105-d may transmit the decoded packet(s) to base station 105-f via one or more wireless links along one or more paths. Each packet may include a path identifier for the corresponding path. For instance, base station 105-d may transmit a second decoded packet via a second wireless link along a second path, and the second decoded packet may include a path identifier for the second path.

At 835, base station 105-d may transmit a feedback message, via a second wireless link, indicating that network decoding of the set of encoded packets to recover a set of packets is successful or unsuccessful. In this example, base station 105-d may perform network decoding as an intermediate node to improve feedback latency. For example, by enabling network coding at an intermediate node, a feedback loop may be shortened (e.g., from an IAB donor DU to the intermediate node or from the intermediate node to an IAB access node).

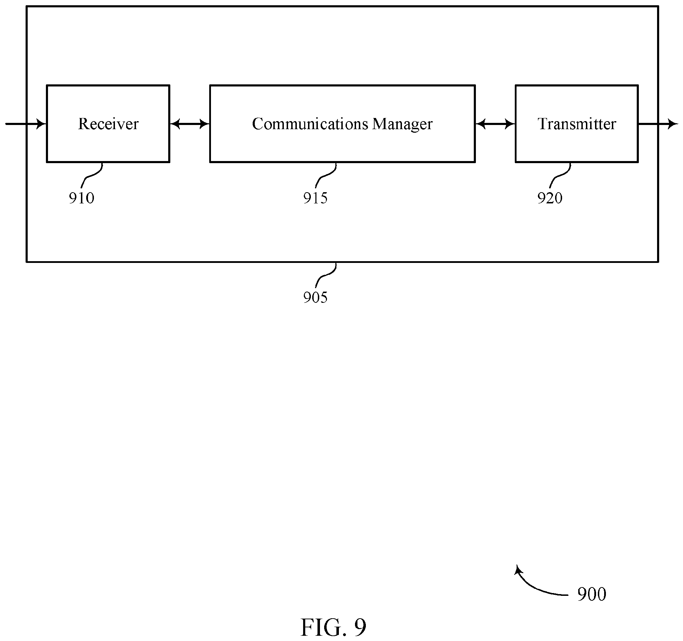

**FIG. 9** shows a block diagram 900 of a device 905 that supports reducing feedback latency for network coding in wireless backhaul communications networks in accordance with aspects of the present disclosure. The device 905 may be an example of aspects of a base station 105 as described herein. The device 905 may include a receiver 910, a communications manager 915, and a transmitter 920. The device 905 may also include a processor. Each of these components may be in communication with one another (e.g., via one or more buses).

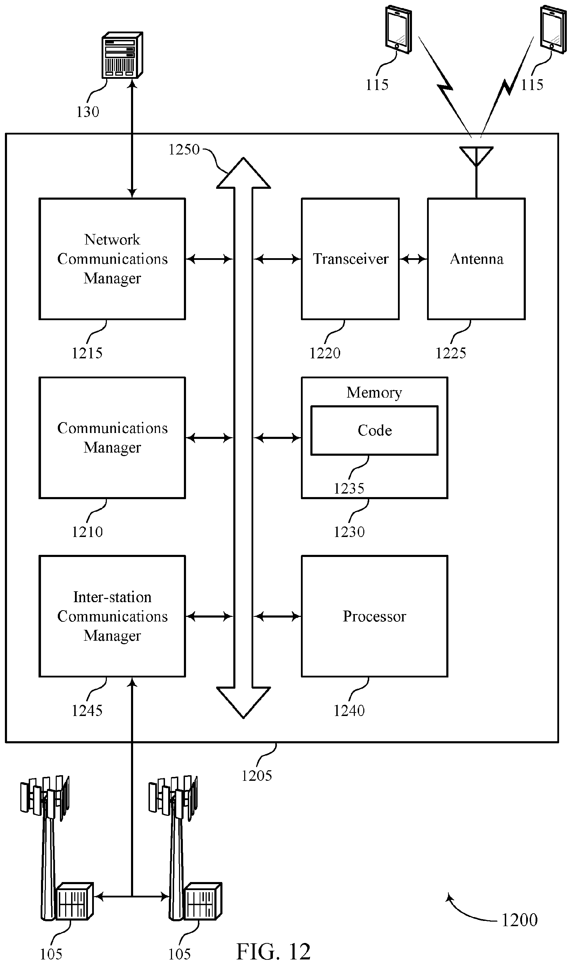

The receiver 910 may receive information such as packets, user data, or control information associated with various information channels (e.g., control channels, data channels, and information related to reducing feedback latency for network coding in wireless backhaul communications networks, etc.). Information may be passed on to other components of the device 905. The receiver 910 may be an example of aspects of the transceiver 1220 described with reference to FIG. 12. The receiver 910 may utilize a single antenna or a set of antennas.

The communications manager 915 may receive, from a central unit node of the wireless backhaul communications network, a configuration indicating that network coding is activated for a packet flow, receive, from a second access node of the wireless backhaul communications network, a first packet of the packet flow via a first wireless link, and transmit, via a second wireless link, a first encoded packet that is generated based on network encoding the first packet. The communications manager 915 may also receive, from a central unit node of the wireless backhaul communications network, a configuration indicating that network coding is activated for a packet flow, receive, from one or more access nodes of the wireless backhaul communications network via one or more wireless links, a set of encoded packets of the packet flow, transmit a first packet of the set of packets recovered by network decoding via a first wireless link along a first path of a plurality of different paths, the first packet including a first path identifier, and transmit a second packet of the plurality of packets recovered by network decoding via a second wireless link along a second path of the plurality of different paths, the second packet including a second path identifier.. The communications manager 915 may also identify an event to trigger activation of network coding functionality for a packet flow by a first access node of the wireless backhaul communications network and transmit, to the first access node, a configuration indicating that network coding is activated for the packet flow. The communications manager 915 may be an example of aspects of the communications manager 1210 described herein.

The communications manager 915, or its sub-components, may be implemented in hardware, code (e.g., software or firmware) executed by a processor, or any combination thereof. If implemented in code executed by a processor, the functions of the communications manager 915, or its sub-components may be executed by a general-purpose processor, a digital signal processor (DSP), an application-specific integrated circuit (ASIC), a field programmable gate array (FPGA) or other programmable logic device, discrete gate or transistor logic, discrete hardware components, or any combination thereof designed to perform the functions described in the present disclosure.

The communications manager 915, or its sub-components, may be physically located at various positions, including being distributed such that portions of functions are implemented at different physical locations by one or more physical components. In some examples, the communications manager 915, or its sub-components, may be a separate and distinct component in accordance with various aspects of the present disclosure. In some examples, the communications manager 915, or its sub-components, may be combined with one or more other hardware components, including but not limited to an input/output (I/O) component, a transceiver, a network server, another computing device, one or more other components described in the present disclosure, or a combination thereof in accordance with various aspects of the present disclosure.

The actions performed by the base station communications manager 915 as described herein may be implemented to realize one or more potential advantages. One implementation may allow a base station 105 to implement network coding schemes for different types of wireless backhaul communications networks. Network coding schemes may provide enhanced robustness against blockages and congested nodes. Supporting network coding at intermediate nodes may enable network coding schemes in, for example, IAB networks which have multiple IAB donor DUs or UEs connected to multiple IAB access nodes. Additionally, performing network coding at an intermediate node may decrease latency for feedback in the wireless backhaul communications network. For example, the intermediate node may decode encoded packets (e.g., packet segments) and provide feedback, which may be a shorter feedback loop, and therefore faster feedback, than a feedback loop from the IAB donor DU to the IAB access node.

The transmitter 920 may transmit signals generated by other components of the device 905. In some examples, the transmitter 920 may be collocated with a receiver 910 in a transceiver module. For example, the transmitter 920 may be an example of aspects of the transceiver 1220 described with reference to FIG. 12. The transmitter 920 may utilize a single antenna or a set of antennas.

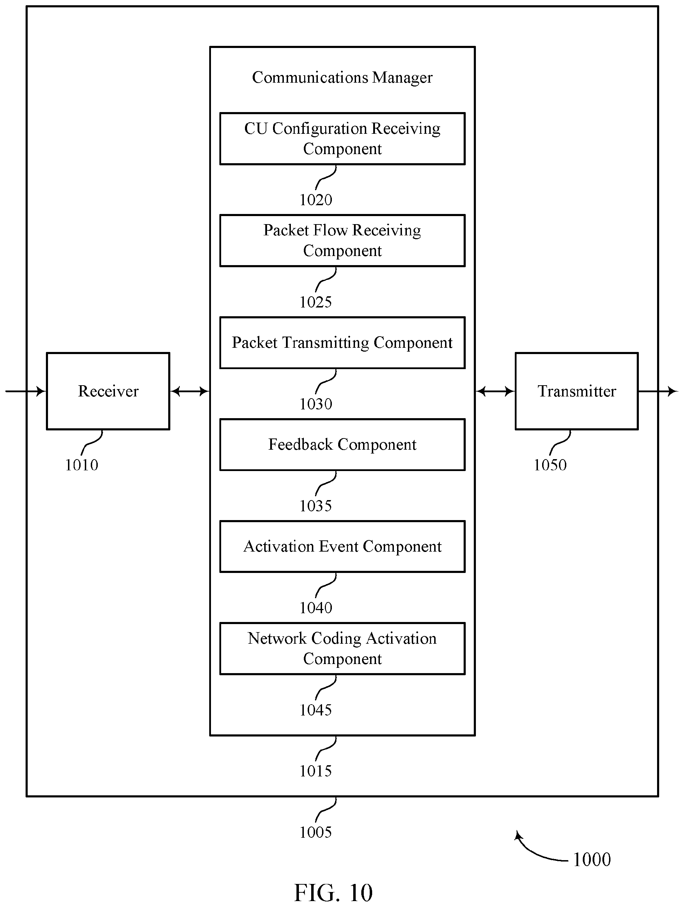

**FIG. 10** shows a block diagram 1000 of a device 1005 that supports reducing feedback latency for network coding in wireless backhaul communications networks in accordance with aspects of the present disclosure. The device 1005 may be an example of aspects of a device 905, or a base station 105 as described herein. The device 1005 may include a receiver 1010, a communications manager 1015, and a transmitter 1050. The device 1005 may also include a processor. Each of these components may be in communication with one another (e.g., via one or more buses).

The receiver 1010 may receive information such as packets, user data, or control information associated with various information channels (e.g., control channels, data channels, and information related to reducing feedback latency for network coding in wireless backhaul communications networks, etc.). Information may be passed on to other components of the device 1005. The receiver 1010 may be an example of aspects of the transceiver 1220 described with reference to FIG. 12. The receiver 1010 may utilize a single antenna or a set of antennas.

The communications manager 1015 may be an example of aspects of the communications manager 915 as described herein. The communications manager 1015 may include a CU configuration receiving component 1020, a packet flow receiving component 1025, a packet transmitting component 1030, a feedback component 1035, an activation event component 1040, and a network coding activation component 1045. The communications manager 1015 may be an example of aspects of the communications manager 1210 described herein.

The CU configuration receiving component 1020 may receive, from a central unit node of the wireless backhaul communications network, a configuration indicating that network coding is activated for a packet flow. The packet flow receiving component 1025 may receive, from a second access node of the wireless backhaul communications network, a first packet of the packet flow via a first wireless link. The packet transmitting component 1030 may transmit, via a second wireless link, a first encoded packet that is generated based on network encoding the first packet.

The CU configuration receiving component 1020 may receive, from a central unit node of the wireless backhaul communications network, a configuration indicating that network coding is activated for a packet flow. The packet flow receiving component 1025 may receive, from one or more access nodes of the wireless backhaul communications network via one or more wireless links, a set of encoded packets of the packet flow. The feedback component 1035 may transmit a feedback message, via a second wireless link, indicating that network decoding of the set of encoded packets to recover a set of packets is successful or unsuccessful.

The activation event component 1040 may identify an event to trigger activation of network coding functionality for a packet flow by a first access node of the wireless backhaul communications network. The network coding activation component 1045 may transmit, to the first access node, a configuration indicating that network coding is activated for the packet flow.

The transmitter 1050 may transmit signals generated by other components of the device 1005. In some examples, the transmitter 1050 may be collocated with a receiver 1010 in a transceiver module. For example, the transmitter 1050 may be an example of aspects of the transceiver 1220 described with reference to FIG. 12. The transmitter 1050 may utilize a single antenna or a set of antennas.

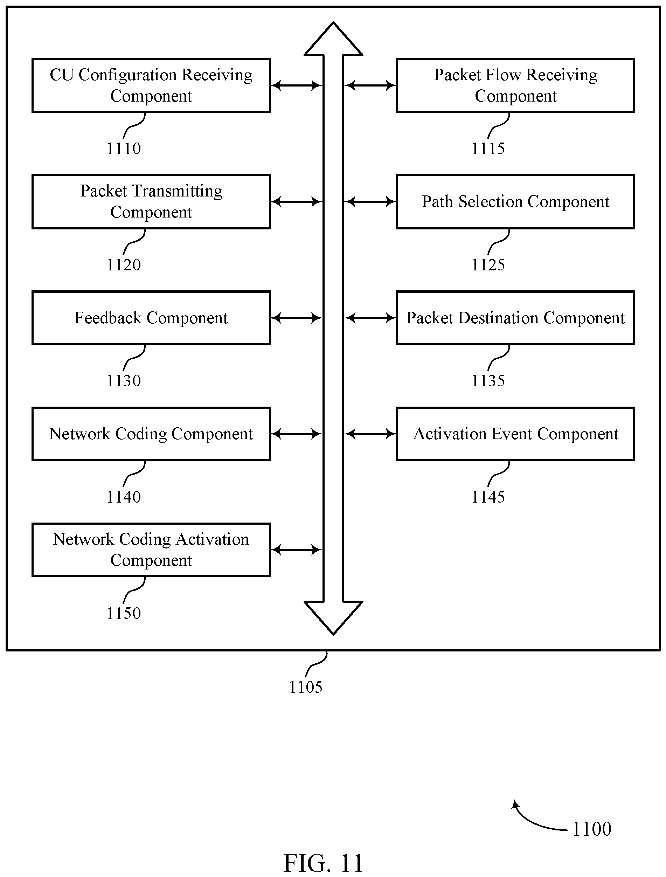

**FIG. 11** shows a block diagram 1100 of a communications manager 1105 that supports reducing feedback latency for network coding in wireless backhaul communications networks in accordance with aspects of the present disclosure. The communications manager 1105 may be an example of aspects of a communications manager 915, a communications manager 1015, or a communications manager 1210 described herein. The communications manager 1105 may include a CU configuration receiving component 1110, a packet flow receiving component 1115, a packet transmitting component 1120, a path selection component 1125, a feedback component 1130, a packet destination component 1135, a network coding component 1140, an activation event component 1145, and a network coding activation component 1150. Each of these modules may communicate, directly or indirectly, with one another (e.g., via one or more buses).

The CU configuration receiving component 1110 may receive, from a central unit node of the wireless backhaul communications network, a configuration indicating that network coding is activated for a packet flow.

In some examples, the CU configuration receiving component 1110 may receive radio resource control signaling or application protocol signaling that indicates the configuration. In some cases, the configuration indicating that network coding is activated for the packet flow is received based on a modification of a network topology. In some cases, the configuration indicating that network coding is activated for the packet flow is received based on a radio link failure report. In some cases, the configuration indicating that network coding is activated for the packet flow is received based on a buffer status reporting indicating congestion. In some cases, the configuration indicating that network coding is activated for the packet flow is received based on establishment, or release, or modification, of a radio link control channel.

The packet flow receiving component 1115 may receive, from a second access node of the wireless backhaul communications network, a first packet of the packet flow via a first wireless link. In some examples, the packet flow receiving component 1115 may receive, from one or more access nodes of the wireless backhaul communications network via one or more wireless links, a set of encoded packets of the packet flow.

In some examples, the packet flow receiving component 1115 may determine a destination address of the first packet. In some examples, the packet flow receiving component 1115 may identify a mismatch between an address of the first access node and the destination address. In some examples, the packet flow receiving component 1115 may provide the first packet for network encoding based on the configuration indicating to perform network coding when address mismatch is identified. In some examples, the packet flow receiving component 1115 may receive a first encoded packet of the set of encoded packets that includes a first path identifier. In some examples, the packet flow receiving component 1115 may receive a second encoded packet of the set of encoded packets that includes a second path identifier.

In some cases, the configuration indicates to perform network coding when address mismatch is identified based on a condition on at least one of the address of the first packet, a path identifier of the first packet, the first wireless link, the second wireless link, or any combination thereof. In some cases, the first wireless link is an ingress link or a radio link control channel. In some cases, the second wireless link is an egress link or a radio link control channel. In some cases, the first path identifier differs from the second path identifier.

The packet transmitting component 1120 may transmit, via a second wireless link, a first encoded packet that is generated based on network encoding the first packet. In some examples, the packet transmitting component 1120 may transmit a first packet of a set of packets recovered by network decoding of the plurality of encoded packets via a first wireless link along a first path of a set of different paths, the first packet including a first path identifier.

In some examples, the packet transmitting component 1120 may transmit a second packet of a set of packets recovered by network decoding of the plurality of encoded packets via a second wireless link along a second path of the set of different paths, the second packet including a second path identifier. In some cases, the first encoded packet is generated based on network encoding the first packet and at least one additional packet of the packet flow. In some cases, the first path differs from the second path.

The feedback component 1130 may transmit a feedback message, via a fourth wireless link, indicating that network decoding of the set of encoded packets to recover a set of packets is successful or unsuccessful. In some examples, the feedback component 1130 may receive feedback indicating that at least one packet of a fraction of data of the packet flow was not successfully received, the fraction of data including the first packet. In some examples, the feedback component 1130 may transmit a second encoded packet that is generated based on network encoding the first packet in response to the feedback.

In some examples, the feedback component 1130 may receive feedback indicating that each packet from a first fraction of data of the packet flow was successfully received, the first fraction of data including the first packet. In some examples, the feedback component 1130 may transmit a second encoded packet that is generated based on network encoding a second packet from a second fraction of data of the packet flow based on the feedback. The activation event component 1145 may identify an event to trigger activation of network coding functionality for a packet flow by a first access node of the wireless backhaul communications network. In some examples, the activation event component 1145 may identify the event based on a modification of a network topology of the wireless backhaul communications network. In some examples, the activation event component 1145 may identify the event based on receiving a radio link failure report. In some cases, the activation event component 1145 may determine a destination address of a first encoded packet of the plurality of encoded packets, identify a mismatch between an address of the first access node and the destination address, and provide the first encoded packet for network decoding based on a condition in the configuration indicating to perform network decoding when address mismatch is identified. In some cases, the condition is on the destination address, a path identifier of the first encoded packet, or both. In some cases, the activation event component 1145 may receive an unencoded packet, identify a mismatch between an address of the first access node and a destination address of the unencoded packet, and transmit the unencoded packet via an egress wireless link or a radio link control channel based on a condition in the configuration indicating to perform packet forwarding when address mismatch is identified.

In some examples, the activation event component 1145 may identify the event based on receiving a buffer status reporting indicating congestion at one or more access nodes of the wireless backhaul communications network. In some examples, the activation event component 1145 may identify the event based on establishment, or release, or modification, of a radio link control channel at one or more access nodes of the wireless backhaul communications network. In some examples, the activation event component 1145 may identify the event based on a time period elapsing.

The network coding activation component 1150 may transmit, to the first access node, a configuration indicating that network coding is activated for the packet flow. In some examples, the network coding activation component 1150 may transmit the configuration that indicates a path selection function for distributing encoded packets amongst a set of different paths. In some examples, the network coding activation component 1150 may transmit the configuration indicating to perform network coding when address mismatch is identified. In some examples, the network coding activation component 1150 may transmit radio resource control signaling or application protocol signaling that indicates the configuration.

In some cases, the path selection function indicates to evenly or unevenly distribute encoded packets amongst the set of different paths. In some cases, the configuration indicates to perform network coding when address mismatch is identified based on a condition on at least one of an address of a packet of the packet flow, a path identifier of the packet, a first wireless link, a second wireless link, or any combination thereof. In some cases, the first wireless link is an ingress link or a radio link control channel. In some cases, the second wireless link is an egress link or a radio link control channel.

The path selection component 1125 may receive the configuration that indicates a path selection function, where the first encoded packet includes a path identifier of a first path of a set of different paths that is selected based on the path selection function and is transmitted via the second wireless link along the first path. In some examples, the path selection component 1125 may transmit a second encoded packet that is generated based on network encoding the first packet. In some examples, the path selection component 1125 may transmit the second encoded packet along a second path of a set of different paths that is selected based on the path selection function. In some cases, the path selection function indicates to evenly or unevenly distribute encoded packets amongst the set of different paths.

The packet destination component 1135 may receive a second packet via the first wireless link. In some examples, the packet destination component 1135 may determine a destination address of the second packet. In some examples, the packet destination component 1135 may identify a mismatch between an address of the first access node and the destination address. In some examples, the packet destination component 1135 may transmit the second packet via the second wireless link or a third wireless link based on the configuration indicating to perform packet forwarding when address mismatch is identified.

In some examples, the packet destination component 1135 may transmit the configuration indicating to perform packet forwarding when address mismatch is identified. In some cases, the configuration indicates to perform packet forwarding when address mismatch is identified based on a condition on at least one of the address of the first packet, a path identifier of the first packet, the first wireless link, the second wireless link, the third wireless link, or any combination thereof. In some cases, the first wireless link is an ingress link or a radio link control channel. In some cases, the second wireless link is an egress link or a radio link control channel.

In some cases, the configuration indicates to perform packet forwarding when address mismatch is identified based on a condition on at least one of an address of a packet of the packet flow, a path identifier of the packet, a first wireless link, a second wireless link, or any combination thereof. In some cases, the first wireless link is an ingress link or a radio link control channel. In some cases, the second wireless link is an egress link or a radio link control channel.

The network coding component 1140 may determine that an amount of data from one or more received packets of the packet flow satisfies a network coding threshold. In some examples, the network coding component 1140 may perform a network encoding operation on the one or more received packets of packet flow based on the network coding threshold being satisfied. In some examples, the network encoding the first packet includes performing a linear network encoding operation or a fountain encoding operation on the first packet. In some examples, the network coding component 1140 may network encode a first fraction of data of the packet flow that includes a first subset of packets of the packet flow to generate the first encoded packet, the first subset of packets including the first packet.

In some examples, the network coding component 1140 may network encode a second fraction of data of the packet flow that includes a second subset of packets of the packet flow to generate a second encoded packet. In some examples, the network coding component 1140 may network decode the set of encoded packets includes performing a linear network decoding operation or a fountain decoding operation on the set of encoded packets. In some cases, the second subset of packets includes at least one packet from the first subset of packets.

**FIG. 12** shows a diagram of a system 1200 including a device 1205 that supports reducing feedback latency for network coding in wireless backhaul communications networks in accordance with aspects of the present disclosure. The device 1205 may be an example of or include the components of device 905, device 1005, or a base station 105 as described herein. The device 1205 may include components for bi-directional voice and data communications including components for transmitting and receiving communications, including a communications manager 1210, a network communications manager 1215, a transceiver 1220, an antenna 1225, memory 1230, a processor 1240, and an inter-station communications manager 1245. These components may be in electronic communication via one or more buses (e.g., bus 1250).

The communications manager 1210 may receive, from a central unit node of the wireless backhaul communications network, a configuration indicating that network coding is activated for a packet flow, receive, from a second access node of the wireless backhaul communications network, a first packet of the packet flow via a first wireless link, and transmit, via a second wireless link, a first encoded packet that is generated based on network encoding the first packet. The communications manager 1210 may also receive, from a central unit node of the wireless backhaul communications network, a configuration indicating that network coding is activated for a packet flow, receive, from one or more access nodes of the wireless backhaul communications network via one or more wireless links, a set of encoded packets of the packet flow, transmit a first packet of a set of packets recovered by network decoding of the plurality of encoded packets via a first wireless link along a first path of a plurality of different paths, the first packet including a first path identifier, and transmit a second packet of the plurality of packets recovered by network decoding of the plurality of encoded packets via a second wireless link along a second path of the plurality of different paths, the second packet including a second path identifier. The communications manager 1210 may also identify an event to trigger activation of network coding functionality for a packet flow by a first access node of the wireless backhaul communications network and transmit, to the first access node, a configuration indicating that network coding is activated for the packet flow.

The network communications manager 1215 may manage communications with the core network (e.g., via one or more wired backhaul links). For example, the network communications manager 1215 may manage the transfer of data communications for client devices, such as one or more UEs 115.

The transceiver 1220 may communicate bi-directionally, via one or more antennas, wired, or wireless links as described above. For example, the transceiver 1220 may represent a wireless transceiver and may communicate bi-directionally with another wireless transceiver. The transceiver 1220 may also include a modem to modulate the packets and provide the modulated packets to the antennas for transmission, and to demodulate packets received from the antennas.

In some cases, the wireless device may include a single antenna 1225. However, in some cases the device may have more than one antenna 1225, which may be capable of concurrently transmitting or receiving multiple wireless transmissions.

The memory 1230 may include RAM, ROM, or a combination thereof. The memory 1230 may store computer-readable code 1235 including instructions that, when executed by a processor (e.g., the processor 1240) cause the device to perform various functions described herein. In some cases, the memory 1230 may contain, among other things, a BIOS which may control basic hardware or software operation such as the interaction with peripheral components or devices.

The processor 1240 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1240 may be configured to operate a memory array using a memory controller. In some cases, a memory controller may be integrated into processor 1240. The processor 1240 may be configured to execute computer-readable instructions stored in a memory (e.g., the memory 1230) to cause the device 1205 to perform various functions (e.g., functions or tasks supporting reducing feedback latency for network coding in wireless backhaul communications networks).

The inter-station communications manager 1245 may manage communications with other base stations 105, and may include a controller or scheduler for controlling communications with UEs 115 in cooperation with other base stations 105. For example, the inter-station communications manager 1245 may coordinate scheduling for transmissions to UEs 115 for various interference mitigation techniques such as beamforming or joint transmission. In some examples, the inter-station communications manager 1245 may provide an X2 interface within an LTE/LTE-A wireless communication network technology to provide communication between base stations 105.

The code 1235 may include instructions to implement aspects of the present disclosure, including instructions to support wireless communications. The code 1235 may be stored in a non-transitory computer-readable medium such as system memory or other type of memory. In some cases, the code 1235 may not be directly executable by the processor 1240 but may cause a computer (e.g., when compiled and executed) to perform functions described herein.

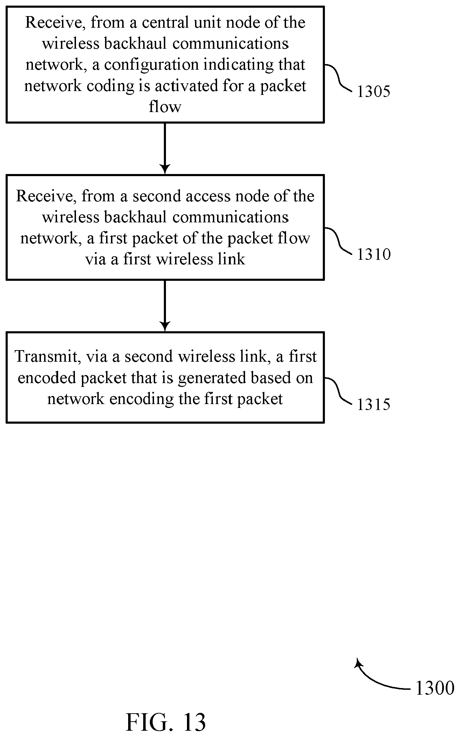

**FIG. 13** shows a flowchart illustrating a method 1300 that supports reducing feedback latency for network coding in wireless backhaul communications networks in accordance with aspects of the present disclosure. The operations of method 1300 may be implemented by a base station 105 or its components as described herein. For example, the operations of method 1300 may be performed by a communications manager as described with reference to FIGs. 9 through 12. In some examples, a base station may execute a set of instructions to control the functional elements of the base station to perform the functions described below. Additionally or alternatively, a base station may perform aspects of the functions described below using special-purpose hardware.

At 1305, the base station may receive, from a central unit node of the wireless backhaul communications network, a configuration indicating that network coding is activated for a packet flow. The operations of 1305 may be performed according to the methods described herein. In some examples, aspects of the operations of 1305 may be performed by a CU configuration receiving component as described with reference to FIGs. 9 through 12.

At 1310, the base station may receive, from a second access node of the wireless backhaul communications network, a first packet of the packet flow via a first wireless link. The operations of 1310 may be performed according to the methods described herein. In some examples, aspects of the operations of 1310 may be performed by a packet flow receiving component as described with reference to FIGs. 9 through 12.

At 1315, the base station may transmit, via a second wireless link, a first encoded packet that is generated based on network encoding the first packet. The operations of 1315 may be performed according to the methods described herein. In some examples, aspects of the operations of 1315 may be performed by a packet transmitting component as described with reference to FIGs. 9 through 12.

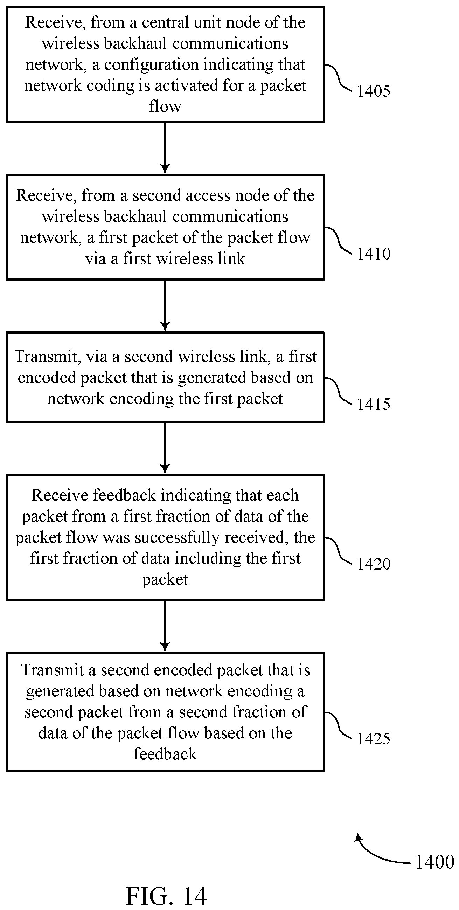

**FIG. 14** shows a flowchart illustrating a method 1400 that supports reducing feedback latency for network coding in wireless backhaul communications networks in accordance with aspects of the present disclosure. The operations of method 1400 may be implemented by a base station 105 or its components as described herein. For example, the operations of method 1400 may be performed by a communications manager as described with reference to FIGs. 9 through 12. In some examples, a base station may execute a set of instructions to control the functional elements of the base station to perform the functions described below. Additionally or alternatively, a base station may perform aspects of the functions described below using special-purpose hardware.

At 1405, the base station may receive, from a central unit node of the wireless backhaul communications network, a configuration indicating that network coding is activated for a packet flow. The operations of 1405 may be performed according to the methods described herein. In some examples, aspects of the operations of 1405 may be performed by a CU configuration receiving component as described with reference to FIGs. 9 through 12.

At 1410, the base station may receive, from a second access node of the wireless backhaul communications network, a first packet of the packet flow via a first wireless link. The operations of 1410 may be performed according to the methods described herein. In some examples, aspects of the operations of 1410 may be performed by a packet flow receiving component as described with reference to FIGs. 9 through 12.

At 1415, the base station may transmit, via a second wireless link, a first encoded packet that is generated based on network encoding the first packet. The operations of 1415 may be performed according to the methods described herein. In some examples, aspects of the operations of 1415 may be performed by a packet transmitting component as described with reference to FIGs. 9 through 12.

At 1420, the base station may receive feedback indicating that each packet from a first fraction of data of the packet flow was successfully received, the first fraction of data including the first packet. The operations of 1420 may be performed according to the methods described herein. In some examples, aspects of the operations of 1420 may be performed by a feedback component as described with reference to FIGs. 9 through 12.

At 1425, the base station may transmit a second encoded packet that is generated based on network encoding a second packet from a second fraction of data of the packet flow based on the feedback. The operations of 1425 may be performed according to the methods described herein. In some examples, aspects of the operations of 1425 may be performed by a feedback component as described with reference to FIGs. 9 through 12.

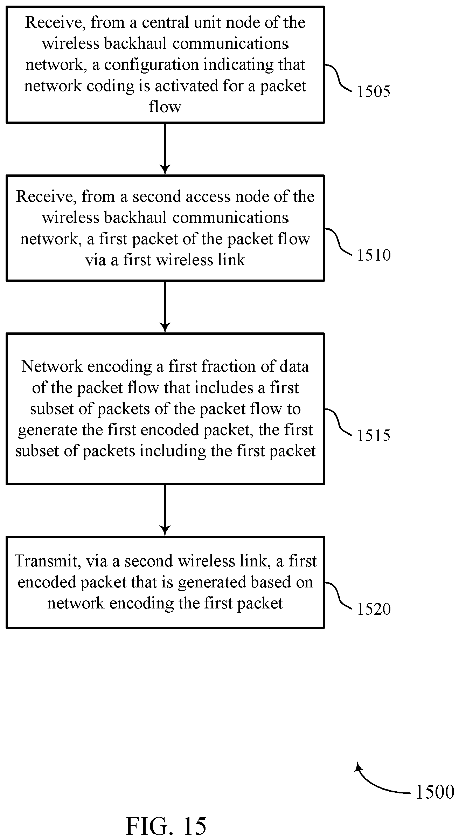

**FIG. 15** shows a flowchart illustrating a method 1500 that supports reducing feedback latency for network coding in wireless backhaul communications networks in accordance with aspects of the present disclosure. The operations of method 1500 may be implemented by a base station 105 or its components as described herein. For example, the operations of method 1500 may be performed by a communications manager as described with reference to FIGs. 9 through 12. In some examples, a base station may execute a set of instructions to control the functional elements of the base station to perform the functions described below. Additionally or alternatively, a base station may perform aspects of the functions described below using special-purpose hardware.

At 1505, the base station may receive, from a central unit node of the wireless backhaul communications network, a configuration indicating that network coding is activated for a packet flow. The operations of 1505 may be performed according to the methods described herein. In some examples, aspects of the operations of 1505 may be performed by a CU configuration receiving component as described with reference to FIGs. 9 through 12.

At 1510, the base station may receive, from a second access node of the wireless backhaul communications network, a first packet of the packet flow via a first wireless link. The operations of 1510 may be performed according to the methods described herein. In some examples, aspects of the operations of 1510 may be performed by a packet flow receiving component as described with reference to FIGs. 9 through 12.

At 1515, the base station may network encoding a first fraction of data of the packet flow that includes a first subset of packets of the packet flow to generate the first encoded packet, the first subset of packets including the first packet. The operations of 1515 may be performed according to the methods described herein. In some examples, aspects of the operations of 1515 may be performed by a network coding component as described with reference to FIGs. 9 through 12.

At 1520, the base station may transmit, via a second wireless link, a first encoded packet that is generated based on network encoding the first packet. The operations of 1520 may be performed according to the methods described herein. In some examples, aspects of the operations of 1520 may be performed by a packet transmitting component as described with reference to FIGs. 9 through 12.

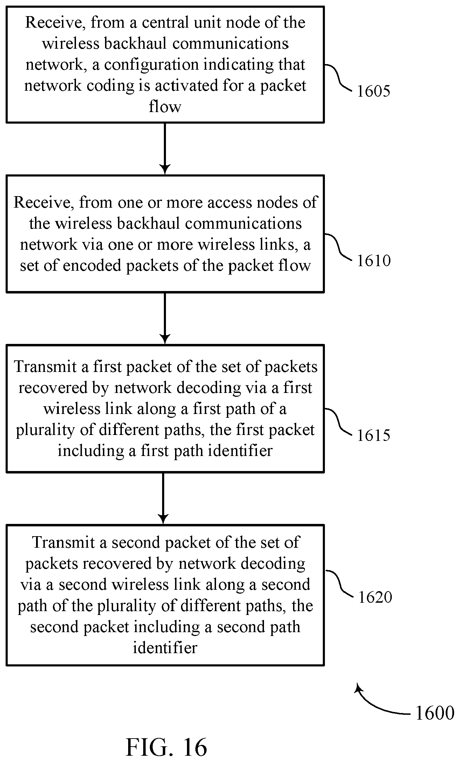

**FIG. 16** shows a flowchart illustrating a method 1600 that supports reducing feedback latency for network coding in wireless backhaul communications networks in accordance with aspects of the present disclosure. The operations of method 1600 may be implemented by a base station 105 or its components as described herein. For example, the operations of method 1600 may be performed by a communications manager as described with reference to FIGs. 9 through 12. In some examples, a base station may execute a set of instructions to control the functional elements of the base station to perform the functions described below. Additionally or alternatively, a base station may perform aspects of the functions described below using special-purpose hardware.

At 1605, the base station may receive, from a central unit node of the wireless backhaul communications network, a configuration indicating that network coding is activated for a packet flow. The operations of 1605 may be performed according to the methods described herein. In some examples, aspects of the operations of 1605 may be performed by a CU configuration receiving component as described with reference to FIGs. 9 through 12.

At 1610, the base station may receive, from one or more access nodes of the wireless backhaul communications network via one or more wireless links, a set of encoded packets of the packet flow. The operations of 1610 may be performed according to the methods described herein. In some examples, aspects of the operations of 1610 may be performed by a packet flow receiving component as described with reference to FIGs. 9 through 12.

At 1615, the base station may transmit a first packet of a set of packets recovered by network decoding of the plurality of encoded packets via a first wireless link along a first path of a plurality of different paths, the first packet including a first path identifier. The operations of 1615 may be performed according to the methods described herein. In some examples, aspects of the operations of 1615 may be performed by a feedback component as described with reference to FIGs. 9 through 12.

At 1620, the base station may transmit a second packet of the set of packets recovered by network decoding of the plurality of encoded packets via a second wireless link along a second path of the plurality of different paths, the second packet including a second path identifier. The operations of 1620 may be performed according to the methods described herein. In some examples, aspects of the operations of 1620 may be performed by a feedback component as described with reference to FIGs. 9 through 12.

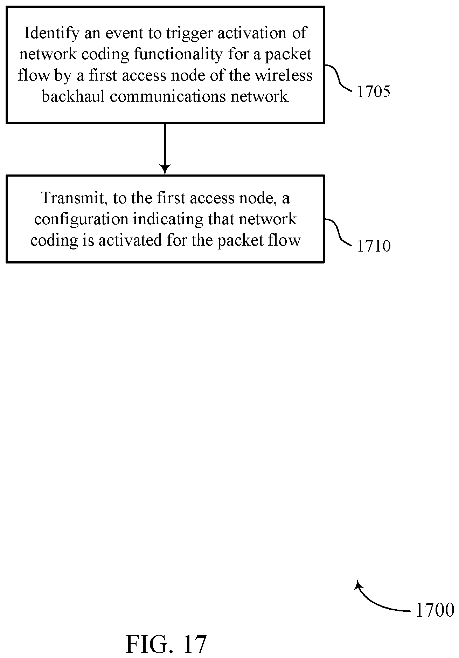

**FIG. 17** shows a flowchart illustrating a method 1700 that supports reducing feedback latency for network coding in wireless backhaul communications networks in accordance with aspects of the present disclosure. The operations of method 1700 may be implemented by a base station 105 or its components as described herein. For example, the operations of method 1700 may be performed by a communications manager as described with reference to FIGs. 9 through 12. In some examples, a base station may execute a set of instructions to control the functional elements of the base station to perform the functions described below. Additionally or alternatively, a base station may perform aspects of the functions described below using special-purpose hardware.

At 1705, the base station may identify an event to trigger activation of network coding functionality for a packet flow by a first access node of the wireless backhaul communications network. The operations of 1705 may be performed according to the methods described herein. In some examples, aspects of the operations of 1705 may be performed by an activation event component as described with reference to FIGs. 9 through 12.

At 1710, the base station may transmit, to the first access node, a configuration indicating that network coding is activated for the packet flow. The operations of 1710 may be performed according to the methods described herein. In some examples, aspects of the operations of 1710 may be performed by a network coding activation component as described with reference to FIGs. 9 through 12.

It should be noted that the methods described herein describe possible implementations, and that the operations and the steps may be rearranged or otherwise modified and that other implementations are possible. Further, aspects from two or more of the methods may be combined.

Techniques described herein may be used for various wireless communications systems such as code division multiple access (CDMA), time division multiple access (TDMA), frequency division multiple access (FDMA), orthogonal frequency division multiple access (OFDMA), single carrier frequency division multiple access (SC-FDMA), and other systems. A CDMA system may implement a radio technology such as CDMA2000, Universal Terrestrial Radio Access (UTRA), etc. CDMA2000 covers IS-2000, IS-95, and IS-856 standards. IS-2000 Releases may be commonly referred to as CDMA2000 1X, 1X, etc. IS-856 (TIA-856) is commonly referred to as CDMA2000 1xEV-DO, High Rate Packet Data (HRPD), etc. UTRA includes Wideband CDMA (WCDMA) and other variants of CDMA. A TDMA system may implement a radio technology such as Global System for Mobile Communications (GSM).

An OFDMA system may implement a radio technology such as Ultra Mobile Broadband (UMB), Evolved UTRA (E-UTRA), Institute of Electrical and Electronics Engineers (IEEE) 802.11 (Wi-Fi), IEEE 802.16 (WiMAX), IEEE 802.20, Flash-OFDM, etc. UTRA and E-UTRA are part of Universal Mobile Telecommunications System (UMTS). LTE, LTE-A, and LTE-A Pro are releases of UMTS that use E-UTRA. UTRA, E-UTRA, UMTS, LTE, LTE-A, LTE-A Pro, NR, and GSM are described in documents from the organization named "3rd Generation Partnership Project" (3GPP). CDMA2000 and UMB are described in documents from an organization named "3rd Generation Partnership Project 2" (3GPP2). The techniques described herein may be used for the systems and radio technologies mentioned herein as well as other systems and radio technologies. While aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR applications.

A macro cell generally covers a relatively large geographic area (e.g., several kilometers in radius) and may allow unrestricted access by UEs with service subscriptions with the network provider. A small cell may be associated with a lower-powered base station, as compared with a macro cell, and a small cell may operate in the same or different (e.g., licensed, unlicensed, etc.) frequency bands as macro cells. Small cells may include pico cells, femto cells, and micro cells according to various examples. A pico cell, for example, may cover a small geographic area and may allow unrestricted access by UEs with service subscriptions with the network provider. A femto cell may also cover a small geographic area (e.g., a home) and may provide restricted access by UEs having an association with the femto cell (e.g., UEs in a closed subscriber group (CSG), UEs for users in the home, and the like). An eNB for a macro cell may be referred to as a macro eNB. An eNB for a small cell may be referred to as a small cell eNB, a pico eNB, a femto eNB, or a home eNB. An eNB may support one or multiple (e.g., two, three, four, and the like) cells, and may also support communications using one or multiple component carriers.

The wireless communications systems described herein may support synchronous or asynchronous operation. For synchronous operation, the base stations may have similar frame timing, and transmissions from different base stations may be approximately aligned in time. For asynchronous operation, the base stations may have different frame timing, and transmissions from different base stations may not be aligned in time. The techniques described herein may be used for either synchronous or asynchronous operations.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a DSP, an ASIC, an FPGA, or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein can be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that can be accessed by a general purpose or special purpose computer. By way of example, and not limitation, non-transitory computer-readable media may include random-access memory (RAM), read-only memory (ROM), electrically erasable programmable ROM (EEPROM), flash memory, compact disk (CD) ROM or other optical disk storage, magnetic disk storage or other magnetic storage devices, or any other non-transitory medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of') indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an exemplary step that is described as "based on condition A" may be based on both a condition A and a condition B without departing from the scope of the present disclosure. In other words, as used herein, the phrase "based on" shall be construed in the same manner as the phrase "based at least in part on."

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "exemplary" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and devices are shown in block diagram form in order to avoid obscuring the concepts of the described examples.

The description herein is provided to enable a person skilled in the art to make or use the disclosure. Various modifications to the disclosure will be readily apparent to those skilled in the art, and the generic principles defined herein may be applied to other variations without departing from the scope of the disclosure. Thus, the disclosure is not limited to the examples and designs described herein, but is to be accorded the broadest scope consistent with the principles and novel features disclosed herein. The scope of protection of the present invention is defined by the attached claims.

## Claims

1. A method for wireless communications by a first access node of a wireless backhaul communications network, comprising:
receiving (710), from a central unit node of the wireless backhaul communications network, a configuration indicating that network coding is activated for a packet flow, wherein the packet flow carries data for a specific UE (115);
receiving, from a second access node of the wireless backhaul communications network, a first packet of the packet flow via a first wireless link; and
transmitting (730), via a second wireless link, a first encoded packet that is generated based at least in part on network encoding the first packet.

2. The method of claim 1, wherein receiving the configuration comprises:
receiving the configuration that indicates a path selection function, wherein the first encoded packet comprises a path identifier of a first path of a plurality of different paths that is selected based at least in part on the path selection function and is transmitted via the second wireless link along the first path.

3. The method of claim 2, further comprising:
transmitting a second encoded packet that is generated based at least in part on network encoding the first packet.

4. The method of claim 3, wherein transmitting the second encoded packet comprises:
transmitting the second encoded packet along a second path of a plurality of different paths that is selected based at least in part on the path selection function.

5. The method of claim 2, wherein the path selection function indicates to evenly or unevenly distribute encoded packets amongst the plurality of different paths.

6. The method of claim 1, further comprising:
receiving feedback indicating that at least one packet of a fraction of data of the packet flow was not successfully received, the fraction of data including the first packet; and
transmitting a second encoded packet that is generated based at least in part on network encoding the first packet in response to the feedback, or
receiving feedback indicating that each packet from a first fraction of data of the packet flow was successfully received, the first fraction of data including the first packet; and
transmitting a second encoded packet that is generated based at least in part on network encoding a second packet from a second fraction of data of the packet flow based at least in part on the feedback.

7. The method of claim 1, wherein the first encoded packet is generated based at least in part on network encoding the first packet and at least one additional packet of the packet flow.

8. The method of claim 1, wherein receiving the first packet of the packet flow via a first wireless link comprises:
determining a destination address of the first packet;
identifying a mismatch between an address of the first access node and the destination address; and optionally
providing the first packet for network encoding based at least in part on the configuration indicating to perform network coding when address mismatch is identified.

9. The method of claim 8, wherein the configuration indicates to perform network coding when address mismatch is identified based at least in part on a condition on at least one of the address of the first packet, a path identifier of the first packet, the first wireless link, the second wireless link, or any combination thereof, optionally wherein the first wireless link is an ingress link or a radio link control channel or the second wireless link is an egress link or a radio link control channel.

10. The method of claim 1, further comprising:
receiving a second packet via the first wireless link;
determining a destination address of the second packet;
identifying a mismatch between an address of the first access node and the destination address; and optionally
transmitting the second packet via the second wireless link or a third wireless link based at least in part on the configuration indicating to perform packet forwarding when address mismatch is identified.

11. The method of claim 10, wherein the configuration indicates to perform packet forwarding when address mismatch is identified based at least in part on a condition on at least one of the address of the first packet, a path identifier of the first packet, the first wireless link, the second wireless link, the third wireless link, or any combination thereof, optionally wherein the first wireless link is an ingress link or a radio link control channel or the second wireless link is an egress link or a radio link control channel.

12. The method of claim 1, wherein the configuration indicating that network coding is activated for the packet flow is received based at least in part on: a modification of a network topology; a radio link failure report; a buffer status reporting indicating congestion; or establishment, or release, or modification, of a radio link control channel.

13. A method for wireless communications by a central entity node of a wireless backhaul communications network, comprising:
identifying an event to trigger activation of network coding functionality for a packet flow by a first access node of the wireless backhaul communications network, wherein the packet flow carries data for a specific UE (115); and
transmitting, to the first access node, a configuration indicating that network coding is activated for the packet flow and that packets of the packet flow received via a first wireless link, from a second access node of the wireless backhaul communications network, are to be network encoded and transmitted over a second wireless link.

14. An apparatus for wireless communications by a first access node of a wireless backhaul communications network, comprising means for performing the method of any of claims 1 to 12.

15. An apparatus for wireless communications by a central entity node of a wireless backhaul communications network, comprising means for performing the method of claim 13.

## Patentansprüche

1. Ein Verfahren für drahtlose Kommunikationen durch einen ersten Zugangsknoten eines drahtlosen Backhaul-Kommunikationsnetzes, aufweisend:
Empfangen (710), von einem zentralen Einheitsknoten des drahtlosen Backhaul-Kommunikationsnetzes, einer Konfiguration, die angibt, dass eine Netzcodierung für einen Paketfluss aktiviert ist, wobei der Paketfluss Daten für ein spezifisches UE (115) trägt,
Empfangen, von einem zweiten Zugangsknoten des drahtlosen Backhaul-Kommunikationsnetzes, eines ersten Pakets des Paketflusses über eine erste drahtlose Verbindung, und
Senden (730), über eine zweite drahtlose Verbindung, eines ersten codierten Pakets, das basierend wenigstens teilweise auf einer Netzcodierung des ersten Pakets generiert wird.

2. Verfahren nach Anspruch 1, wobei das Empfangen der Konfiguration aufweist:
Empfangen der Konfiguration, die eine Pfadauswahlfunktion angibt, wobei das erste codierte Paket einen Pfadidentifizierer eines ersten Pfads aus einer Vielzahl von verschiedenen Pfaden, der basierend wenigstens teilweise auf der Pfadauswahlfunktion ausgewählt wird, aufweist und über die zweite drahtlose Verbindung entlang des ersten Pfads gesendet wird.

3. Verfahren nach Anspruch 2, das weiterhin aufweist:
Senden eines zweiten codierten Pakets, das basierend wenigstens teilweise auf einer Netzcodierung des ersten Pakets generiert wird.

4. Verfahren nach Anspruch 3, wobei das Senden des zweiten codierten Pakets aufweist:
Senden des zweiten codierten Pakets entlang eines zweiten Pfads aus einer Vielzahl von verschiedenen Pfaden, der basierend wenigstens teilweise auf der Pfadauswahlfunktion ausgewählt wird.

5. Verfahren nach Anspruch 2, wobei die Pfadauswahlfunktion das gleichmäßige oder ungleichmäßige Verteilen von codierten Paketen auf die Vielzahl von verschiedenen Pfaden aufweist.

6. Verfahren nach Anspruch 1, das weiterhin aufweist:
Empfangen einer Rückmeldung, die angibt, dass wenigstens ein Paket aus einem Teil der Daten des Paketflusses nicht erfolgreich empfangen wurde, wobei der Teil der Daten das erste Paket umfasst, und
Senden eines zweiten codierten Pakets, das basierend wenigstens teilweise auf einer Netzcodierung des ersten Pakets in Antwort auf die Rückmeldung generiert wird, oder
Empfangen einer Rückmeldung, die angibt, dass jedes Paket aus einem ersten Teil der Daten des Paketflusses erfolgreich empfangen wurde, wobei der erste Teil der Daten das erste Paket umfasst, und
Senden eines zweiten codierten Pakets, das basierend wenigstens teilweise auf einer Netzcodierung eines zweiten Pakets aus einem zweiten Teil der Daten des Paketflusses generiert wird, basierend wenigstens teilweise auf der Rückmeldung.

7. Verfahren nach Anspruch 1, wobei das erste codierte Paket basierend wenigstens teilweise auf einer Netzcodierung des ersten Pakets und wenigstens eines zusätzlichen Pakets des Paketflusses generiert wird.

8. Verfahren nach Anspruch 1, wobei das Empfangen des ersten Pakets des Paketflusses über die erste drahtlose Verbindung aufweist:
Bestimmen einer Zieladresse des ersten Pakets,
Identifizieren einer Fehlübereinstimmung zwischen der Adresse des ersten Zugangsknotens und der Zieladresse, und
optional, Vorsehen des ersten Pakets für eine Netzcodierung basierend wenigstens teilweise auf der Konfiguration, die angibt, dass eine Netzcodierung durchgeführt werden soll, wenn eine Adressenfehlübereinstimmung identifiziert wird.

9. Verfahren nach Anspruch 8, wobei die Konfiguration angibt, dass eine Netzcodierung durchgeführt werden soll, wenn eine Adressfehlübereinstimmung identifiziert wird, basierend wenigstens teilweise auf einer Bedingung der Adresse des ersten Pakets, eines Pfadidentifizierers des ersten Pakets, der ersten drahtlosen Verbindung, der zweiten drahtlosen Verbindung oder einer beliebigen Kombination aus diesen, wobei, optional, die erste drahtlose Verbindung eine Eintrittsverbindung oder ein Funkverbindungssteuerkanal ist oder die zweite drahtlose Verbindung ein Austrittsverbindung oder ein Funkverbindungssteuerkanal ist.

10. Verfahren nach Anspruch 1, das weiterhin aufweist:
Empfangen eines zweiten Pakets über die erste drahtlose Verbindung,
Bestimmen einer Zieladresse des zweiten Pakets,
Identifizieren einer Fehlübereinstimmung zwischen einer Adresse des ersten Zugangsknotens und der Zieladresse, und
optional, Senden des zweiten Pakets über die zweite drahtlose Verbindung oder eine dritte drahtlose Verbindung basierend wenigstens teilweise auf der Konfiguration, die angibt, dass eine Paketweiterleitung durchgeführt werden soll, wenn eine Adressfehlübereinstimmung identifiziert wird.

11. Verfahren nach Anspruch 10, wobei die Konfiguration angibt, dass eine Paketweiterleitung durchgeführt werden soll, wenn eine Adressfehlübereinstimmung identifiziert wird, basierend wenigstens teilweise auf einer Bedingung der Adresse des ersten Pakets, eines Pfadidentifizieres des ersten Pakets, der ersten drahtlosen Verbindung, der zweiten drahtlosen Verbindung, der dritten drahtlosen Verbindung oder einer beliebigen Kombination aus diesen, wobei, optional, die erste drahtlose Verbindung eine Eintrittsverbindung oder ein Funkverbindungssteuerkanal ist oder die zweite drahtlose Verbindung eine Austrittsverbindung oder ein Funkverbindungssteuerkanal ist.

12. Verfahren nach Anspruch 1, wobei die Konfiguration, die angibt, dass eine Netzcodierung für den Paketfluss aktiviert ist, empfangen wird basierend wenigstens teilweise auf einer Modifikation einer Netztopologie, einem Funkverbindungsfehlerbericht, einem Pufferstatusbericht, der einen Stau angibt, oder einer Herstellung, einer Freigabe oder einer Modifikation eines Funkverbindungssteuerkanals.

13. Ein Verfahren für drahtlose Kommunikationen durch einen zentralen Einheitsknoten eines drahtlosen Backhaul-Kommunikationsnetzes, aufweisend:
Identifizieren eines Ereignisses für das Auslösen einer Aktivierung einer Netzcodierungsfunktion für einen Paketfluss durch einen ersten Zugangsknoten des drahtlosen Backhaul-Kommunikationsnetzes, wobei der Paketfluss Daten für einen spezifischen UE (115) trägt, und
Senden, an den ersten Zugangsknoten, einer Konfiguration, die angibt, dass eine Netzcodierung für den Paketfluss aktiviert ist und dass über eine erste drahtlose Verbindung von einem zweiten Zugangsknoten des drahtlosen Backhaul-Kommunikationsnetzes empfangene Pakete des Paketflusses netzcodiert und über eine zweite drahtlose Verbindung gesendet werden sollen.

14. Eine Vorrichtung für drahtlose Kommunikationen durch einen ersten Zugangsknoten eines drahtlosen Backhaul-Kommunikationsnetzes, die Mittel zum Durchführen des Verfahrens gemäß den Ansprüchen 1 bis 12 aufweist.

15. Eine Vorrichtung für drahtlose Kommunikationen durch einen zentralen Einheitsknoten eines drahtlosen Backhaul-Kommunikationsnetzes, die Mittel zum Durchführen des Verfahrens gemäß dem Anspruch 13 aufweist.

## Revendications

1. Procédé de communication sans fil par un premier noeud d'accès d'un réseau de communication terrestre sans fil, comprenant les étapes consistant à :
recevoir (710), en provenance d'un noeud d'unité centrale du réseau de communication terrestre sans fil, une configuration indiquant qu'un codage de réseau est activé pour un flux de paquets, le flux de paquets transportant des données pour un UE spécifique (115) ;
recevoir, en provenance d'un second noeud d'accès du réseau de communication terrestre sans fil, un premier paquet du flux de paquets par l'intermédiaire d'une première liaison sans fil ; et
émettre (730), par l'intermédiaire d'une deuxième liaison sans fil, un premier paquet codé qui est généré sur la base, au moins en partie, d'un codage de réseau du premier paquet.

2. Procédé selon la revendication 1, dans lequel la réception de la configuration comprend l'étape consistant à :
recevoir la configuration qui indique une fonction de sélection de chemin, le premier paquet codé comprenant un identifiant de chemin d'un premier chemin, d'une pluralité de chemins différents, qui est sélectionné sur la base, au moins en partie, de la fonction de sélection de chemin et qui est émis par l'intermédiaire de la deuxième liaison sans fil sur le premier chemin.

3. Procédé selon la revendication 2, comprenant en outre l'étape consistant à :
émettre un second paquet codé qui est généré sur la base, au moins en partie, d'un codage de réseau du premier paquet.

4. Procédé selon la revendication 3, dans lequel l'émission du second paquet codé comprend l'étape consistant à :
émettre le second paquet codé sur un second chemin, d'une pluralité de chemins différents, qui est sélectionné sur la base, au moins en partie, de la fonction de sélection de chemin.

5. Procédé selon la revendication 2, dans lequel la fonction de sélection de chemin indique de distribuer de manière égale ou inégale des paquets codés parmi la pluralité de chemins différents.

6. Procédé selon la revendication 1, comprenant en outre les étapes consistant à :
recevoir un retour d'information indiquant qu'au moins un paquet d'une fraction de données du flux de paquets n'a pas été reçu avec succès, la fraction de données comprenant le premier paquet ; et
émettre un second paquet codé qui est généré sur la base, au moins en partie, d'un codage de réseau du premier paquet en réponse au retour d'information, ou
recevoir un retour d'information indiquant que chaque paquet d'une première fraction de données du flux de paquets a été reçu avec succès, la première fraction de données comprenant le premier paquet ; et
émettre un second paquet codé qui est généré sur la base, au moins en partie, d'un codage de réseau d'un second paquet d'une seconde fraction de données du flux de paquets sur la base, au moins en partie, du retour d'information.

7. Procédé selon la revendication 1, dans lequel le premier paquet codé est généré sur la base, au moins en partie, d'un codage de réseau du premier paquet et d'au moins un paquet supplémentaire du flux de paquets.

8. Procédé selon la revendication 1, dans lequel la réception du premier paquet du flux de paquets par l'intermédiaire d'une première liaison sans fil comprend les étapes consistant à :
déterminer une adresse de destination du premier paquet ;
identifier une non-concordance entre une adresse du premier noeud d'accès et l'adresse de destination ; et éventuellement
fournir le premier paquet en vue d'un codage de réseau sur la base, au moins en partie, de la configuration indiquant qu'il faut effectuer un codage de réseau lorsqu'une non-concordance d'adresses est identifiée.

9. Procédé selon la revendication 8, dans lequel la configuration indique qu'il faut effectuer un codage de réseau lorsqu'une non-concordance d'adresses est identifiée sur la base, au moins en partie, d'une condition concernant au moins un élément parmi l'adresse du premier paquet, un identificateur de chemin du premier paquet, la première liaison sans fil, la deuxième liaison sans fil ou une combinaison quelconque correspondante, éventuellement la première liaison sans fil étant une liaison d'entrée ou un canal de commande de liaison radio ou la deuxième liaison sans fil étant une liaison de sortie ou un canal de commande de liaison radio.

10. Procédé selon la revendication 1, comprenant en outre les étapes consistant à :
recevoir un second paquet par l'intermédiaire de la première liaison sans fil ;
déterminer une adresse de destination du second paquet ;
identifier une non-concordance entre une adresse du premier noeud d'accès et l'adresse de destination ; et éventuellement
émettre le second paquet par l'intermédiaire de la deuxième liaison sans fil ou d'une troisième liaison sans fil sur la base, au moins en partie, de la configuration indiquant qu'il faut effectuer un transfert de paquet lorsqu'une non-concordance d'adresses est identifiée.

11. Procédé selon la revendication 10, dans lequel la configuration indique qu'il faut effectuer un transfert de paquet lorsqu'une non-concordance d'adresses est identifiée sur la base, au moins en partie, d'une condition concernant au moins un élément parmi l'adresse du premier paquet, un identificateur de chemin du premier paquet, la première liaison sans fil, la deuxième liaison sans fil, la troisième liaison sans fil ou une combinaison quelconque correspondante, éventuellement la première liaison sans fil étant une liaison d'entrée ou un canal de commande de liaison radio ou la deuxième liaison sans fil étant une liaison de sortie ou un canal de commande de liaison radio.

12. Procédé selon la revendication 1, dans lequel la configuration indiquant qu'un codage de réseau est activé pour le flux de paquets est reçue sur la base, au moins en partie : d'une modification d'une topologie de réseau ; d'un rapport de défaillance de liaison radio ; d'un rapport d'état de tampon indiquant une congestion ; ou d'un établissement, d'une libération ou d'une modification d'un canal de commande de liaison radio.

13. Procédé de communication sans fil par un noeud d'entité centrale d'un réseau de communication terrestre sans fil, comprenant les étapes consistant à :
identifier un événement pour déclencher l'activation d'une fonctionnalité de codage de réseau pour un flux de paquets par un premier noeud d'accès du réseau de communication terrestre sans fil, le flux de paquets transportant des données pour un UE spécifique (115) ; et
émettre, vers le premier noeud d'accès, une configuration indiquant qu'un codage de réseau est activé pour le flux de paquets et que des paquets du flux de paquets, reçus par l'intermédiaire d'une première liaison sans fil, en provenance d'un second noeud d'accès du réseau de communication terrestre sans fil, doivent être soumis à un codage de réseau et émis par l'intermédiaire d'une deuxième liaison sans fil.

14. Appareil de communication sans fil par un premier noeud d'accès d'un réseau de communication terrestre sans fil, comprenant un moyen permettant de réaliser le procédé selon l'une quelconque des revendications 1 à 12.

15. Appareil de communication sans fil par un noeud d'entité centrale d'un réseau de communication terrestre sans fil, comprenant un moyen permettant de réaliser le procédé selon la revendication 13.
